(19) Europäisches Patentamt
European Patent Office
Office européen des brevets

(11) **EP 2 458 398 A2**

(12) **DEMANDE DE BREVET EUROPEEN**

(43) Date de publication:
**30.05.2012 Bulletin 2012/22**

(51) Int Cl.:
*G01S 3/74* [(2006.01)]          *H01Q 1/12* [(2006.01)]
*H01Q 21/24* [(2006.01)]

(21) Numéro de dépôt: **11191235.8**

(22) Date de dépôt: **30.11.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **30.11.2010 FR 1004651**

(71) Demandeur: **Thales**
**92200 Neuilly Sur Seine (FR)**

(72) Inventeurs:
• **Ferreol, Anne**
**92700 Colombes (FR)**
• **Jaehn, Stéphane**
**92700 Colombes (FR)**

(74) Mandataire: **Dudouit, Isabelle et al**
**Marks & Clerk France**
**Immeuble Visium**
**22, avenue Aristide Briand**
**94117 Arcueil Cedex (FR)**

(54) **Procédé d'optimisation d'un réseau de capteurs hétérogènes pour la goniométrie**

(57)    La solution proposée met en oeuvre un procédé et un système d'optimisation d'un réseau de capteurs à partir d'un cahier des charges. Cette solution comprend notamment:
• la modélisation en incidence et polarisation du gain d'une antenne en fonction de son orientation ($\alpha_n$, $\beta_n$) et de sa nature physique,
• l'établissement de liens mathématiques reliant la directivité du réseau et la précision de goniométrie à la géométrie du réseau de capteurs qui dépend du triplet ($\mathbf{p_n}$, $\alpha_n$, $\beta_n$),
• la détermination des ambiguïtés d'ordre 1 et d'ordre supérieurs à 1 d'un réseau en diversité de polarisation,
• la mise en oeuvre d'un processus d'optimisation de la géométrie à partir d'un cahier des charges de performan- ces et de contraintes.

FIG.11

**Description**

L'invention concerne notamment un procédé pour optimiser la position $\mathbf{p}_n$ et les orientations $\alpha_n$ $\beta_n$ de N capteurs ou antennes dans un réseau de capteurs hétérogènes, les N capteurs étant identiques à partir de données contenues dans un cahier des charges, telles que les performances, l'encombrement, etc., en vue notamment de réaliser des étapes de goniométrie en présence de **M** sources.

La position $\mathbf{p}_n$ du n$^{ième}$ capteur est un vecteur de coordonnées, prises, par exemple dans un repère cartésien; les orientations du capteur seront désignées $\alpha_n$ $\beta_n$.

Le domaine technique de l'invention concerne la goniométrie en diversité de polarisation, c'est-à-dire l'estimation des incidences des sources conjointement à la polarisation **P**.

Elle est utilisée notamment pour des réseaux homogènes comprenant des capteurs à gains identiques, ou des réseaux hétérogènes comprenant des capteurs possédant des gains différents, par exemple, un même élément rayonnant avec des orientations différentes. Dans la suite de la description, on parlera de capteurs ou d'antennes et de réseaux comprenant plusieurs antennes ou capteurs. Un réseau dit « hétérogène » est un réseau comprenant des capteurs identiques avec des orientations différentes. Un réseau « hétérogène » est peux aussi être composé de capteurs différents. Un réseau dit « homogène » est un réseau comprenant plusieurs capteurs ou antennes identiques ayant les mêmes orientations.

Le domaine technique dans lequel l'invention s'applique est plus particulièrement celui de la détermination conjointe de la position optimale des antennes ainsi que de leurs orientations à partir de critères de performances fixés initialement. Le procédé concerne donc les réseaux hétérogènes composés de capteurs identiques avec des orientations différentes où la réponse du réseau à une direction $\Theta$ dépend du vecteur d'onde $\mathbf{k}(\Theta)$, des positions $\mathbf{p}_n$ des capteurs ainsi que des orientations $\alpha_n$ et $\beta_n$.

Le domaine technique concerné par la présente demande de brevet est celui du traitement d'antennes qui traite les signaux de plusieurs sources émettrices incidentes à un ensemble de capteurs à partir des signaux reçus par les capteurs du réseau. Un ensemble de capteurs est appelé réseau d'antennes ou réseau de capteurs.

Dans un contexte électromagnétique, les capteurs sont des antennes sachant que les sources radio-électriques se propagent selon une polarisation qui dépend de l'antenne émettrice ainsi que du canal de propagation. Dans un contexte acoustique, les capteurs sont des microphones, par exemple, et les sources sont sonores.

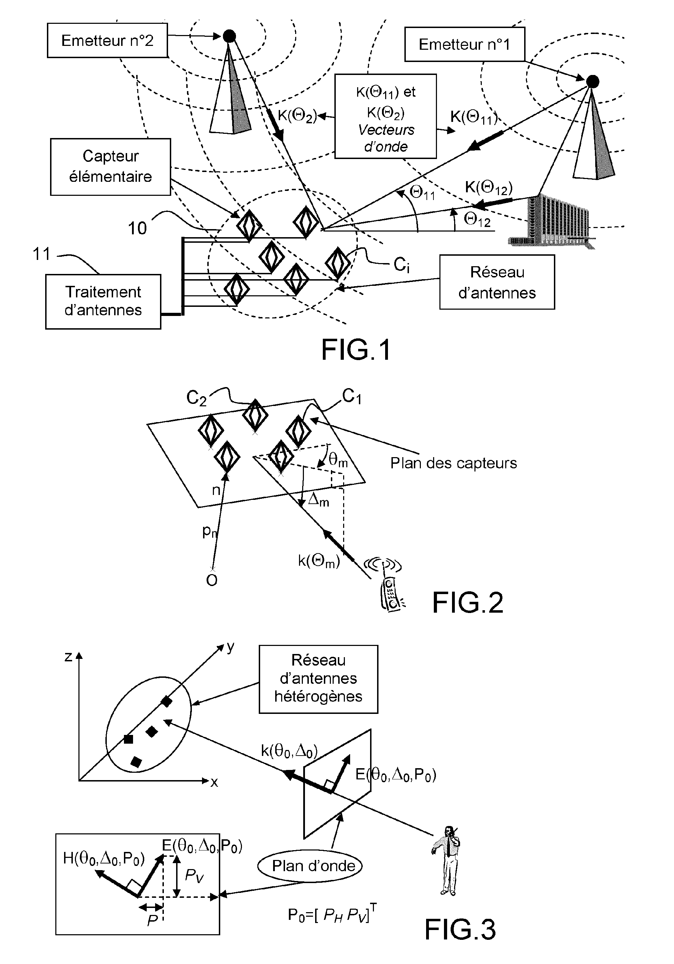

La figure 1 montre un exemple de système de traitement d'antennes où un réseau 10 de capteurs Ci reçoit les signaux de plusieurs sources d'incidence $\Theta_{mp}$ , le réseau de capteurs étant en liaison avec un processeur 11 permettant d'exécuter les différentes étapes des procédés de traitement de signaux et du procédé selon l'invention.

Les techniques de traitement d'antennes ont notamment pour objectif de séparer ou d'extraire des informations associées à chacune des sources en exploitant la diversité spatiale dépendant de la géométrie du réseau d'antennes et de l'incidence $\Theta_{mp}$ des sources. Le domaine est plus particulièrement celui de la goniométrie qui consiste à estimer les directions $\Theta_{mp}$ de chacune des sources.

Les capteurs du réseau reçoivent les sources avec une phase et une amplitude dépendant en particulier des incidences des trajets, de la position des capteurs et de la polarisation dans un contexte radio-électrique. Dans un contexte radio-électrique, cette phase et cette amplitude dépendent aussi de la polarisation de l'onde incidente.

D'après la figure 2, l'incidence d'un trajet est soit définie par des paramètres de direction $\Theta_m=\{\theta_m$ et $\Delta_m \}$, soit par le vecteur d'onde $\mathbf{k}(\Theta_m)=[u_m, \upsilon_m, w_m]^T$ qui est de norme unité et qui donne la direction de l'onde. Les angles $\theta_m$ et $\Delta_m$ sont respectivement l'azimut et l'élévation.

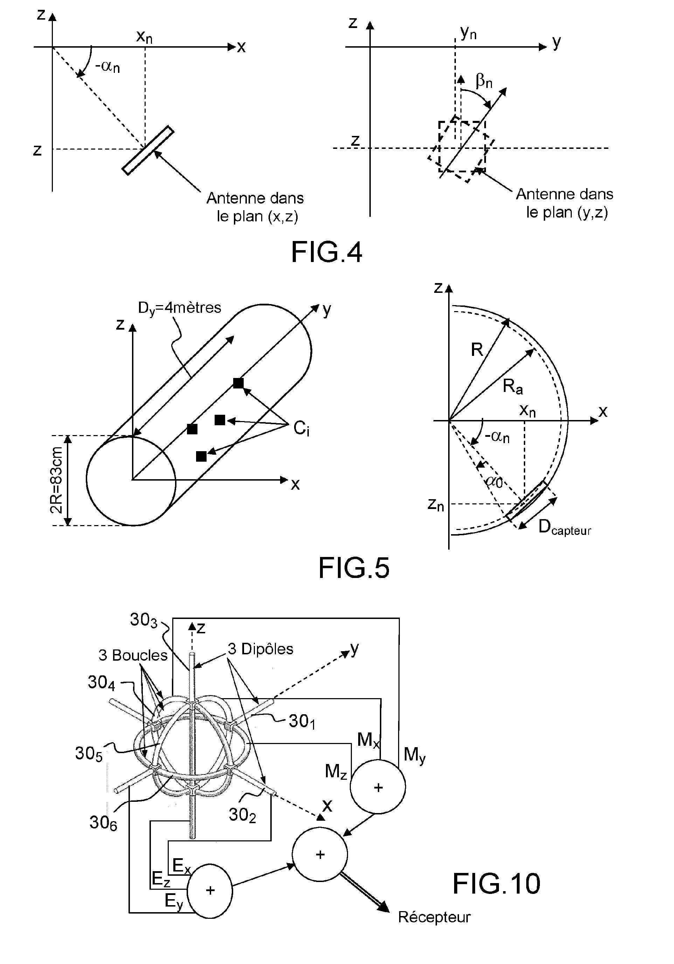

D'après la figure 3, la polarisation d'une onde radio-électrique est définie par la direction du vecteur **E** du champ électrique qui se propage dans un plan perpendiculaire au vecteur d'onde $\mathbf{k}(\Theta_m)$ nommé «plan d'onde ». La direction du vecteur **H** du champ magnétique est définie dans le plan d'onde par la règle des 3 doigts comme perpendiculaire aux vecteurs **E** et k$(\Theta_m)$. Dans ce contexte, le gain en amplitude et phase d'une antenne dépend de la nature de l'élément rayonnant (dipôle, patch, papillon, monopole, etc....) ainsi que de son orientation dans l'espace. On dira que l'on a un réseau de capteurs homogènes lorsque tous les capteurs du réseau sont des éléments rayonnant identiques ayant la même orientation dans l'espace. Lorsque le réseau de capteurs n'est pas homogène on a un réseau de capteurs hétérogènes. Ainsi il est possible d'avoir un réseau de capteurs hétérogènes lorsque toutes les antennes sont des éléments rayonnants de nature différente ou alors lorsque les antennes sont de même nature avec une orientation différente. Le contexte de ce procédé est celui d'un réseau d'antennes hétérogènes où les antennes sont identiques avec des orientations $\alpha_n$ et $\beta_n$ différentes définies par la figure 4. D'après les remarques précédentes un réseau de capteurs hétérogènes a une réponse en amplitude et en phase qui dépend conjointement de l'incidence $\Theta_m$ et de la polarisation **E** $(\Theta_m)$ de la source incidence. D'un point de vue général, les antennes hétérogènes sont installées sur une structure. Selon une autre possibilité les antennes qui sont planes sont installées de façon conforme à une structure de type cylindrique dont la forme est donnée par la figure 5. Une antenne est dite conforme à une structure lorsque la forme de l'antenne s'adapte parfaitement à la forme de la structure $\Rightarrow$ une antenne plane est orientée dans le plan tangentiel du point de contact avec la structure (voir la figure 5). Il est à noter que la contrainte de conformité de l'antenne sur la structure impose des contraintes sur les angles d'orientations $\alpha_n$ et $\beta_n$ qui deviennent partiellement liées à la position des capteurs sur la structure.

Une technique de goniométrie a notamment pour objectif d'estimer les composantes soit de $\Theta_m$ soit de $\mathbf{k}(\Theta_m)$ permettant d'obtenir l'incidence d'une source. En présence d'un réseau de capteurs hétérogènes, il est nécessaire d'effectuer une goniométrie en diversité de polarisation qui consiste à estimer le vecteur de polarisation $\mathbf{E}(\Theta_m)$ conjointement à l'incidence $\Theta_m$. Une goniométrie est dite $q$-D lorsque le nombre de paramètres des vecteurs ($\Theta_m$ soit k($\Theta_m$)) à estimer vaut $q$. Les autres paramètres sont soit connus a priori soit indéterminés. D'après la figure 2, le vecteur $\mathbf{p}_n = [x_n \; y_n \; z_n]^T$ est le vecteur de position du n-ième capteur par rapport à un point d'origine $\mathbf{O}$. Un réseau de $N$ antennes est dit $d$-D, lorsque l'espace engendré par les vecteurs de position $\mathbf{p_n}$ ($1 \leq n \leq$ N) est de dimension $d$. En conséquence un réseau linéaire est de dimension 1 (1-D) et un réseau plan de dimension 2 (2-D).

L'un des problèmes techniques à résoudre est celui de l'optimisation de la géométrie d'un réseau d'antennes hétérogènes. Plus particulièrement, l'objectif est de déterminer la position $\mathbf{p_n}$ ainsi que les orientations ($\alpha_n$, $\beta_n$) des N capteurs pour ($1 \leq n \leq N$) à partir de critères de performances contenus dans un cahier des charges tels que :

- la précision mono-source ou bi-sources,

- la résolution de deux sources,

sous des contraintes telles que :

- le nature physique de l'antenne élémentaire qui comprend en particulier sa taille ou encore son type (dipôle, patch, papillon, monopole, etc.),

- la structure porteuse des antennes qui est par un exemple le cylindre de la figure 5,

- la nécessité de réaliser un réseau conforme ou non conforme à une structure,

- le secteur angulaire d'intérêt en terme d'azimut et ou d'élévation,

- la gamme de fréquences du goniomètre,

- un nombre d'antennes donné $N$,

- le caractère plus ou moins omnidirectionnel du réseau d'antennes dans une certaine zone de l'espace des incidences,

- un encombrement maximal donné,

- des positions admissibles et non admissibles d'implantation des capteurs sur la structure,

- une distance minimale entre capteurs pour minimiser le couplage mutuel entre antennes ou prendre en compte la taille des capteurs,

- un niveau maximal d'ambiguïtés donné.

Notons qu'un réseau est dit omni-directionnel lorsque les performances mono-source du réseau sont les mêmes quelques soit la direction d'arrivée.

Il existe des techniques d'optimisation de réseaux homogènes telles que celles décrites dans les demandes de brevets FR 09/03836 ou FR 09/03835 qui permettent de déterminer les positions optimales $\mathbf{p_n}$ des capteurs d'un réseau homogène afin de vérifier de critères de performances sous certaines contraintes dont l'encombrement. Les capteurs sont dans ce cas de même nature avec des orientations identiques ($\alpha_1 = ... = \alpha_N = \alpha$) et ($\beta_1 = ... = \beta_N = \beta$) et la recherche d'une orientation $\alpha_n$ et $\beta_n$ optimale est dans ce cas inutile car quelque que soit les couples ($\alpha_n$, $\beta_n$) les caractéristiques du réseau restent identiques.

L'optimisation de réseaux homogènes s'appuie sur des outils de performances développées dans la publication de A.Ferréol et P.Chevalier intitulée « high resolution direction finding : from performance toward antenna array optimization case- the mono-source », case EUSIPCO, Glasgow, Scotland, August 24-28, 2009 de calcul de performances théorique. En particulier, dans le cas des réseaux homogènes la précision mono-source est inversement proportionnelle à l'ouverture équivalente qui correspond à l'encombrement du réseau. Cet encombrement dépend dans ce cas unique-

ment des positions **p$_n$** de chacun des capteurs. Dans le cas des réseaux hétérogènes les performances sont différentes en dépendant du triplet (**p$_n$**, α$_n$, β$_n$). En conséquence, les outils optimisation ainsi que la méthode d'optimisation des réseaux hétérogènes seront alors différentes de celles des réseaux homogènes.

Les différentes méthodes connues de l'art antérieur ne permettent toutefois pas de résoudre les problèmes suivants :

- une optimisation de réseaux hétérogènes reposant sur la recherche du triplet de paramètres optimaux (**p$_n$** α$_n$ , β$_n$) pour chacune des antennes et permettant d'obtenir des réseaux respectant un cahier des charges en termes de performances et d'encombrement,

- le calcul des performances en termes de précision d'un réseau de capteur hétérogène,

- la modélisation du gain d'un élément rayonnant qui dépend de sa nature physique (dipôle,....) ainsi que de sa rotation (α$_n$ , β$_n$ ) dans l'espace, et

- une application limitée qui ne tient pas compte du cas des réseaux hétérogènes qui dépendent en plus de leur position p$_n$ des orientations (α$_n$ , β$_n$ ) de chacun des capteurs ainsi que de la nature physique des antennes.

L'objet de la présente invention concerne un procédé pour déterminer la position **p$_n$** et les orientations (α$_n$, β$_n$) de capteurs Ci ou antennes dans un réseau de capteurs hétérogènes comprenant *N* capteurs identiques avec des orientations (α$_n$, β$_n$) à partir de données contenues dans un cahier des charges, telles que les performances de goniométrie en présence de *M* sources, l'encombrement, ledit réseau de capteurs étant pourvu de moyens de traitement de signaux reçus sur lesdits capteurs et destiné à effectuer une étape de goniométrie caractérisé en ce qu'il comporte au moins les étapes suivantes :

- déterminer le gain G$_n$ d'un capteur *d'indice n* de position **p$_n$** ayant subi une rotation (α$_n$, β$_n$) , en utilisant G$_n$(Θ,**P**)

$$=g(\alpha_n,\beta_n)^T\mathbf{u}(\Theta,\mathbf{P}) \text{ sachant que } \mathbf{g}\left(\alpha_n,\beta_n\right)=\begin{bmatrix} rot\left(\alpha_n\right) & 0 \\ 0 & rot\left(\alpha_n\right) \end{bmatrix}\begin{bmatrix} rot\left(\beta_n\right) & 0 \\ 0 & rot\left(\beta_n\right) \end{bmatrix}\mathbf{em}$$

avec

**em** = [$E_x$ $E_y$ $E_z$ $M_x$ $M_y$ $M_z$]$^T$ les composantes électriques et magnétiques du capteur, $^T$ est la transposée, P est la polarisation

- déterminer, à partir de la matrice de gain **G** des antennes contenant les **g**(α$_n$, β$_n$) le vecteur directeur **a**(Θ, P) d'un réseau hétérogène comme le produit d'une matrice diagonale Φ(Θ) contenant sur sa diagonale les composantes $a_i$ du vecteur directeur du réseau homogène , avec **G** la matrice de gain et **u**(Φ,**P**) un vecteur directement dépendant du vecteur champ électrique de la polarisation verticale **k**$_V$ (Θ) et du vecteur champ électrique de la polarisation verticale **k**$_H$ (Θ) du capteur ainsi que des composantes de la polarisation

**a**(Θ,**P**) =Φ(Θ)x**G**x**u**(Φ,**P**)

où

$$\Phi\left(\Theta\right)=\begin{bmatrix} a_1^{homogene}\left(\Theta\right) & 0 & 0 \\ 0 & \ddots & 0 \\ 0 & 0 & a_N^{homogene}\left(\Theta\right) \end{bmatrix} \text{ et } \mathbf{G}=\begin{bmatrix} \mathbf{g}\left(\alpha_1,\beta_1\right)^T \\ \vdots \\ \mathbf{g}\left(\alpha_N,\beta_N\right)^T \end{bmatrix}$$

avec $a_n^{homogène}$ (Θ) la réponse du *n*-ième capteur d'un réseau homogène dépendant de l'incidence Θ , du vecteur **em** associé à l'élément rayonnant des antennes ainsi que du triplet *(α$_n$, β$_n$, **P**$_n$)*,

- déterminer un ensemble de triplets (α$_n$, β$_n$, **p**$_n$) pour (1≤*n*≤*N*) vérifiant
un critère fixé par le cahier des charges.

L'invention concerne aussi un dispositif pour déterminer la position optimale de capteurs dans un réseau comprenant plusieurs capteurs Ci ou antennes caractérisé en ce qu'il comporte des moyens de traitement adaptés à mettre en oeuvre les étapes du procédé présenté ci-avant.

D'autres caractéristiques et avantages de la présente invention apparaîtront mieux à la lecture de la description qui suit d'exemples de mise en oeuvre donnés à titre illustratif et nullement limitatifs annexés des figures qui représentent :

- La figure 1, un exemple d'architecture comprenant un émetteur se propageant vers un réseau de capteurs,

- La figure 2, une représentation pour l'incidence d'une source,

- La figure 3, la représentation de la polarisation P0 d'une onde incidente,

- La figure 4, la représentation de la rotation d'une antenne dans l'espace suivant les angles $\alpha_n$ **et** $\beta_n$,

- La figure 5, une antenne plane installée sur un cylindre,

- Les figures 6 et 7, une représentation du vecteur d'onde,

- Les figures 8 et 9, la modélisation dans le cas d'un dipôle ou d'une boucle,

- La figure 10, une représentation avec un schéma équivalent du modèle d'une antenne dans un cas général,

- La figure 11, un schéma d'optimisation d'un réseau hétérogène composé d'antennes conforme sur un cylindre

- La figure 12, une représentation d'une antenne papillon vertical,

- La figure 13, les composantes électriques et magnétiques normalisées de l'antenne de la figure 12,

- La figure 14, la représentation des angles de rotation d'une antenne,

- La figure 15, la représentation d'un réseau 2 dimensions, circulaire uniforme,

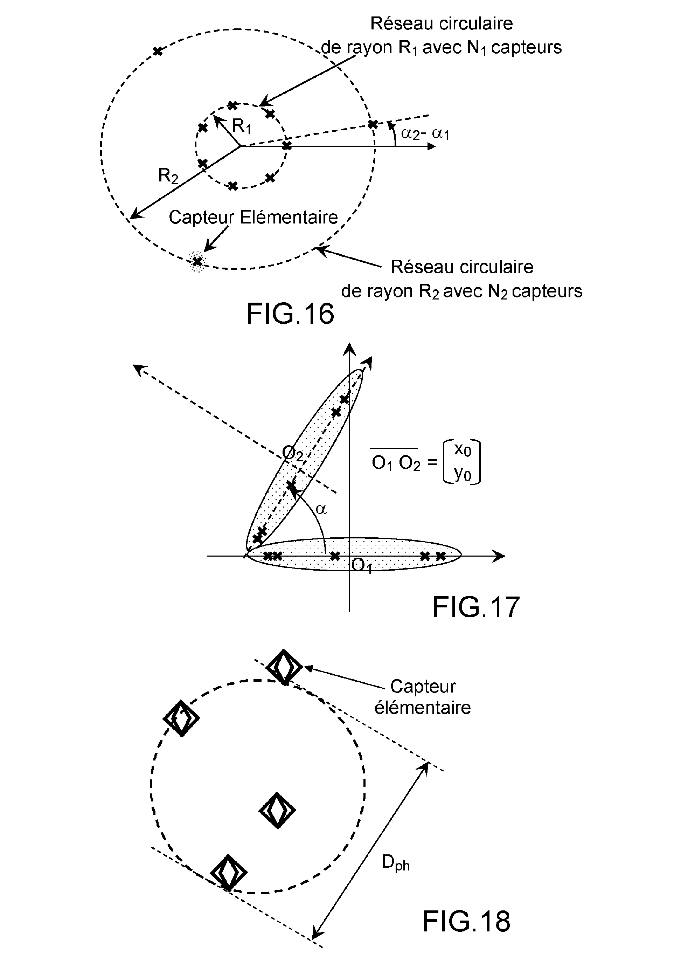

- La figure 16, un exemple de réseau comprenant deux cercles concentriques ;

- La figure 17, un exemple de réseau en V, et

- La figure 18, l'ouverture physique d'un réseau en 2 dimensions.

La description qui suit donnée à titre illustratif et nullement limitatif concerne un exemple de mise en oeuvre du procédé d'optimisation selon l'invention au sein d'un réseau de capteurs tel que celui représenté à la figure 1, par exemple. Le réseau est un réseau de capteurs hétérogènes comprenant N capteurs identiques avec des orientations ($\alpha$n, $\beta$n) et est en présence de M sources.

En présence de *M* sources, le signal en sortie du réseau 10 de *N* capteurs Ci s'écrit de la façon suivante :

$$
\mathbf{x}(t) = \begin{bmatrix} x_1(t) \\ \vdots \\ x_N(t) \end{bmatrix} = \sum_{m=1}^{M} \tilde{\mathbf{a}}(\Theta_m, \mathbf{P}_m)\, \mathbf{s}_m(t) + \mathbf{n}(t) \tag{1}.
$$

où $x_n(t)$ est le signal reçu sur le n-ième capteur, $s_m(t)$ est le signal de la m-ième source, $\mathbf{n}(t)$ est le bruit additif, $\Theta_m$ est la direction d'arrivée de la source définie à la figure 2, $\mathbf{P}_m$ est la polarisation définie à la figure 3 et $\tilde{\mathbf{a}}(\Theta_m, \mathbf{P}_m)$ est le vecteur directeur observé. En présence d'erreur de modèle le vecteur $\tilde{\mathbf{a}}(\Theta_m, \mathbf{P}_m)$ s'écrit :

$$
\tilde{\mathbf{a}}(\Theta_m, \mathbf{P}_m) = \mathbf{a}(\Theta_m, \mathbf{P}_m) + \mathbf{e}_m \tag{2}.
$$

où $\mathbf{a}(\Theta_m, \mathbf{P}_m)$ est le vecteur directeur théorique tel que $\mathbf{a}(\Theta_m, \mathbf{P}_m)^H\, \mathbf{a}(\Theta_m, \mathbf{P}_m) = N$ et $e_m$ est l'erreur de modèle. Selon la figure 2 et sachant que les capteurs sont hétérogènes, la n-ième composante de $a(\Theta_m, \mathbf{P}_m)$ s'écrit:

$$a_n(\Theta, \mathbf{P}) = G_n(\Theta, \mathbf{P}) \; a_n^{homogene}(\Theta) \; \text{avec} \; a_n^{homogene}(\Theta) = \exp\left( j\frac{2\pi}{\lambda} \mathbf{k}(\Theta)^T \mathbf{p}_n \right) \qquad (3).$$

où $\mathbf{p}_n = [x_n \; y_n \; z_n]^T$ est le vecteur de position, $\lambda$ est la longueur d'onde et k $(\Theta)$ est le vecteur d'onde tel que :

$$\mathbf{k}(\Theta) = \begin{bmatrix} u \\ v \\ w \end{bmatrix} \; \text{avec} \; \begin{cases} \text{u} = \cos(\theta)\cos(\Delta) \\ \text{v} = \sin(\theta)\cos(\Delta) \\ \text{w} = \sin(\Delta) \end{cases} \qquad (4).$$

où $\Theta = \{\theta, \Delta\}$ dépend de l'azimut et de l'élévation qui sont définis à la figure 2. Un réseau est dit hétérogène lorsque les gains des antennes $G_n(\Theta, \mathbf{P})$ ne sont pas identiques. Dans les paragraphes qui suivent il sera montré que $G_n(\Theta, \mathbf{P})$ dépend de l'orientation $(\alpha_n, \beta_n)$ de l'antenne ainsi que d'autres paramètres dépendant de la nature physique de l'antenne.

L'objectif de la goniométrie en diversité de polarisation est d'estimer conjointement à la polarisation $\mathbf{P}_m$ les paramètres d'incidence $\psi_m = \Theta_m$ ou $\mathbf{k}(\Theta_m)$ pouvant être égaux soit à la direction $\Theta_m$ soit au vecteur d'onde $\mathbf{k}(\Theta_m)$. Un algorithme de goniométrie en diversité de polarisation donne les estimées $(\hat{\psi}_m, \hat{\mathbf{P}}_m)$ à partir d'un critère dépendant des paramètres $\psi = \Theta$ ou $\mathbf{k}(\Theta)$ et de la polarisation $\mathbf{P}$. Les performances peuvent être données en termes de précision avec le biais

$$E\left[ \hat{\Psi}_m \right] - \Psi_m,$$

et la variance ou EQM qui s'écrit

$$\text{MS}_{\Psi_m} = E\left[ \Delta\Psi_m \Delta\Psi_m^{\;T} \right] \; \text{avec} \; \Delta\Psi_m = \hat{\Psi}_m - \Psi_m,$$

où les ambiguïtés d'ordre $M$ sont définies de la manière suivante: un réseau est ambiguë mathématiquement à l'ordre $M$ lorsqu'il existe au moins une incidence $\psi^{ambig} \neq \psi_m$ dont le vecteur directeur $a(\psi^{ambig}, \mathbf{P}^{ambig})$ appartient à l'espace engendré par les vecteurs directeurs $\mathbf{a}(\psi_m, \mathbf{P}_m)$ des sources incidentes pour $1 \leq m \leq M$.

Les conditions de directionalité et de précision du cahier des charges en mono-source donneront la forme de l'ellipse d'incertitude dans l'espace des paramètres $\psi$. Il sera montré plus loin dans la description, que cette ellipse dépend de la répartition spatiale des positions $\mathbf{p}_n$ ainsi que des orientations $(\alpha_n, \beta_n)$ des capteurs. Cela permettra alors de transformer un réseau initial suivant les statistiques du cahier des charges par un processus itératif de blanchiment puis coloration termes connus de l'Homme du métier.

D'autre part, on sait que dans une famille de réseaux ayant des performances identiques en mono-source et bi-sources que tous les réseaux n'ont pas la même robustesse aux ambiguïtés. Il faudra alors classer les réseaux de cette famille suivant un critère d'ambiguïtés défini plus loin dans la description.

Le procédé selon l'invention utilise des Outils de base permettant l'optimisation de réseau décrits ci-après.

**Modélisation d'une antenne ayant subi une rotation ($\alpha$, $\beta$)**

Le procédé selon l'invention repose sur une approche consistant notamment à effectuer une optimisation de réseaux avec des antennes hétérogènes ayant des diagrammes différents. Afin de résoudre ce problème complexe une première étape consiste à effectuer une modélisation paramétrique des antennes. Pour aborder le problème en difficultés croissantes, nous nous intéressons dans un premier temps à la modélisation des dipôles idéaux puis à celle des boucles idéales pour ensuite modéliser des antennes quelconques dont le diagramme a été calculé par une simulation électromagnétique. Cette modélisation aura l'avantage de déduire facilement le diagramme de rayonnement d'une antenne ayant subi une rotation ($\alpha$, $\beta$).

Dans ce contexte, il est nécessaire de prendre en compte la polarisation car les diagrammes de rayonnement des antennes dépendent de la polarisation définie en figure 3. D'un point de vue général toute onde se propage avec une polarisation $\mathbf{P}$ (projection du vecteur champ électrique $\mathbf{E}$ dans le plan d'onde qui est perpendiculaire à $\mathbf{k}(\theta, \Delta)$)

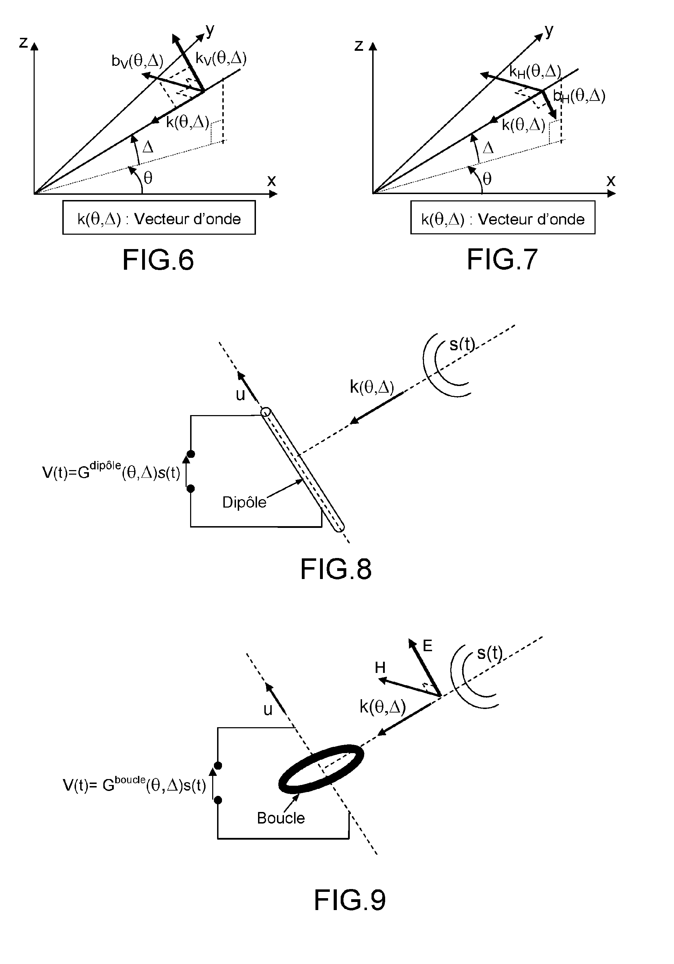

donnée qui est la combinaison linéaire de la polarisation V où $\mathbf{E}=\mathbf{k_V}$ et de la polarisation **H** où $\mathbf{E}=\mathbf{k_H}$. L'onde se propage avec une composante magnétique **H** qui est perpendiculaire au champ électrique **E** ainsi que le vecteur champ électrique $\mathbf{k}(\theta, \Delta)$. Les composantes électrique et magnétique sont incluses dans le plan d'onde qui est perpendiculaire au vecteur d'onde $\mathbf{k}(\theta, \Delta)$. On note par $\mathbf{b_V}$ et $\mathbf{b_H}$ les composantes magnétiques des polarisations V et H. Les figures 6 à 9 représentent les composantes électrique et magnétique dans le cas des polarisations V et H.

La figure 6 représente les composantes électriques et magnétiques de la polarisation V. La figure 7 schématise les composantes électriques et magnétiques de la polarisation H.

Les figures 6 et figure 7 montrent que les vecteurs $\mathbf{k_V}$ et $\mathbf{b_H}$ ainsi que $\mathbf{b_V}$ et $\mathbf{k_H}$ sont colinéaires. Suivant les repères définis à la figure 6 et à la figure 7, ces différents vecteurs champ électrique de la polarisation respectivement verticale et de la polarisation horizontale du capteur s'écrivent :

$$\mathbf{k}_V\left(\Theta\right) = -\mathbf{b}_H\left(\Theta\right) = \begin{bmatrix} -\cos\left(\theta\right)\sin\left(\Delta\right) \\ -\sin\left(\theta\right)\sin\left(\Delta\right) \\ \cos\left(\Delta\right) \end{bmatrix} \text{ et } \mathbf{k}_H\left(\Theta\right) = \mathbf{b}_V\left(\Theta\right) = \begin{bmatrix} -\sin\left(\theta\right) \\ \cos\left(\theta\right) \\ 0 \end{bmatrix} \qquad (5)\ .$$

D'un point de vue général, les dipôles sont sensibles uniquement à la composante électrique, tandis que les boucles (ou cadres) sont sensibles à la composante magnétique de l'onde électromagnétique.

**Cas d'un dipôle idéal**

Un dipôle idéal est un fil infiniment long et fin qui a la caractéristique d'être sensible à uniquement la composante électrique. En notant par u le vecteur unité donnant l'orientation du dipôle, les gains $G_V^{dipole}(\Theta)$ et $G_H^{dipole}(\Theta)$ en polarisation V et H vérifient :

$$G_V^{\ dipole}\left(\Theta\right) = \mathbf{k}_V\left(\Theta\right)^H \mathbf{u} \quad \text{ et } \quad G_H^{\ dipole}\left(\Theta\right) = \mathbf{k}_H\left(\Theta\right)^H \mathbf{u} \qquad (6)\ .$$

où $u^H u = 1$. Le gain du dipôle a alors l'expression suivante :

$$G^{dipole}\left(\Theta, \mathbf{P}\right) = \mathbf{u}^H \mathbf{E}\left(\Theta, \mathbf{P}\right) = PV \times G_V^{\ dipole}\left(\Theta\right) + PH \times G_H^{\ dipole}\left(\Theta\right) \qquad (7)\ .$$

où $P = [PH\ PV]^T$ sachant que PV et PH sont respectivement les composantes en polarisation V et H du dipôle. La figure 8 montre un dipôle d'orientation **u** en présence d'une onde de direction $k(\theta,\Delta)$ que la tension V(t) obtenue aux deux extrémités du dipôle est proportionnelle à $G^{dipole}(\Theta,\mathbf{P})$.

**Cas d'une boucle idéale**

Une boucle idéale a la caractéristique d'être sensible à la composante magnétique uniquement. En notant par **u** le vecteur unité donnant l'orientation de la boucle, les gains $G_V^{boucle}(\Theta)$ et $G_H^{boucle}(\Theta)$ en polarisation V et H vérifient :

$$G_V^{\ boucle}\left(\Theta\right) = \mathbf{k}_H\left(\Theta\right)^H \mathbf{u} \quad \text{ et } \quad G_H^{\ boucle}\left(\Theta\right) = -\mathbf{k}_V\left(\Theta\right)^H \mathbf{u} \qquad (8)\ .$$

où $\mathbf{u}^H \mathbf{u} = 1$. Le gain du dipôle a alors l'expression suivante :

$$G^{boucle}\left(\Theta, \mathbf{P}\right) = \mathbf{u}^H \mathbf{H}\left(\Theta, \mathbf{P}\right) = PV \times G_V^{\ boucle}\left(\Theta\right) + PH \times G_H^{\ boucle}\left(\Theta\right) \qquad (9)\ .$$

où $P = [PH\ PV]^T$ sachant que PV et PH sont respectivement les composantes en polarisation V et H du dipôle. La figure 8 montre que la tension $V(t)$ obtenue aux deux extrémités du dipôle est proportionnelle à $G^{dipole}(\Theta,\mathbf{P})$. La figure 9 représente une boucle d'orientation **u** en présence d'une onde de direction $\mathbf{k}(\theta, \Delta)$.

**Cas général**

Dans le cas général les simulations électromagnétiques ont permis de montrer qu'une antenne se décompose suivant 3 dipôles $30_1$, $30_2$, $30_3$ et 3 boucles orthogonales $30_4$, $30_5$, $30_6$ comme l'indique la figure 10. Les gains $E_x$, $E_y$, $E_z$ sont les composantes électriques suivant les axes x, y et z et correspondent aux gains des dipôles suivants ces trois axes. Les gains $M_x$, $M_y$, $M_z$ sont les composantes magnétiques suivant les axes x, y et z et correspondent aux gains des dipôles suivants ces trois axes. Une antenne quelconque peut alors se modéliser comme une voie préformée d'un réseau composé de 3 dipôles et 3 boucles. La figure 5 donne le schéma équivalent d'une antenne quelconque suivant 3 boucles et 3 dipôles.

Le gain d'une antenne, de direction $\Theta$ et de polarisation **P** s'écrit alors :

$$G(\Theta, \mathbf{P}) = E_x G_x^{dipole}(\Theta, \mathbf{P}) + E_y G_y^{dipole}(\Theta, \mathbf{P}) + E_z G_z^{dipole}(\Theta, \mathbf{P})$$
$$+ M_x G_x^{boucle}(\Theta, \mathbf{P}) + E_y G_y^{boucle}(\Theta, \mathbf{P}) + E_z G_z^{boucle}(\Theta, \mathbf{P}) \tag{10}$$

où $G_x^{dipole}(\Theta, \mathbf{P})$, $G_y^{dipole}(\Theta, \mathbf{P})$ et $G_z^{dipole}(\Theta, \mathbf{P})$ sont les gains respectifs des dipôles dont les directions sont ceux des axes x, y et z et $G_x^{boucle}(\Theta, \mathbf{P})$, $G_y^{dipole}(\Theta, \mathbf{P})$ et $G_z^{dipole}(\Theta, \mathbf{P})$ sont les gains des boucles de directions respectives x, y et z. Il est possible sans sortir du cadre de l'invention de généraliser la notion d'une antenne à un élément rayonnant composé d'une antenne en présence de sa structure porteuse.

Cette modélisation a été vérifiée et validée sur des simulations électromagnétiques. L'estimation des composantes électriques $E_x$, $E_y$, $E_z$ et magnétiques $M_x$, $M_y$, $M_z$ est effectuée au sens des moindres carrés de la manière suivante :

$$\mathbf{em} = \min_{\mathbf{em}} \left( \sum_k \left| G_k - \mathbf{em}^T \mathbf{g}_k \right|^2 \right)$$

$$\text{avec} \begin{cases} \mathbf{em} = \begin{bmatrix} E_x & E_y & E_z & M_x & M_y & M_z \end{bmatrix}^T \\ G_k = G(\Theta_k, \mathbf{P}_k) \\ \mathbf{g}_k = \begin{bmatrix} \left( \mathbf{g}_k^{dipole} \right)^T & \left( \mathbf{g}_k^{boucle} \right)^T \end{bmatrix}^T \\ \mathbf{g}_k^{dipole} = \begin{bmatrix} G_x^{dipole}(\Theta_k, \mathbf{P}_k) & G_y^{dipole}(\Theta_k, \mathbf{P}_k) & G_z^{dipole}(\Theta_k, \mathbf{P}_k) \end{bmatrix}^T \\ \mathbf{g}_k^{boucle} = \begin{bmatrix} G_x^{boucle}(\Theta_k, \mathbf{P}_k) & G_y^{boucle}(\Theta_k, \mathbf{P}_k) & G_z^{boucle}(\Theta_k, \mathbf{P}_k) \end{bmatrix}^T \end{cases} \tag{11}$$

Où les points de mesure de la simulation électromagnétique sont suivant une incidence $\Theta_k$ et une polarisation $P_k$ qui est en faite soit la polarisation V soit la polarisation H. La minimisation de l'équation (11) donne la solution suivante

$$\mathbf{em} = \left( \mathbf{U}^H \mathbf{U} \right)^{-1} \mathbf{U}^H \mathbf{u}$$

$$\text{avec} \begin{cases} \mathbf{U} = \begin{bmatrix} (\mathbf{g}_1)^T \\ \vdots \\ (\mathbf{g}_K)^T \end{bmatrix} \quad \text{et} \quad \mathbf{u} = \begin{bmatrix} G_1 \\ \vdots \\ G_K \end{bmatrix} \end{cases} \tag{12}$$

Il est à noter que les composantes électriques et magnétiques d'une antenne varient en fonction de la fréquence. Dans un réseau hétérogène seules les composantes électriques et magnétiques suivantes normalisées par le gain global joueront un rôle dans l'optimisation.

$$\tilde{E}_x = \frac{E_x}{\sqrt{G_{globale}}} \quad \tilde{E}_y = \frac{E_y}{\sqrt{G_{globale}}} \quad \tilde{E}_z = \frac{E_z}{\sqrt{G_{globale}}}$$

$$\tilde{M}_x = \frac{M_x}{\sqrt{G_{globale}}} \quad \tilde{M}_y = \frac{M_y}{\sqrt{G_{globale}}} \quad \tilde{M}_z = \frac{M_z}{\sqrt{G_{globale}}} \tag{13}$$

$$G_{globale} = \left|E_x\right|^2 + \left|E_y\right|^2 + \left|E_z\right|^2 + \left|M_x\right|^2 + \left|M_y\right|^2 + \left|M_z\right|^2$$

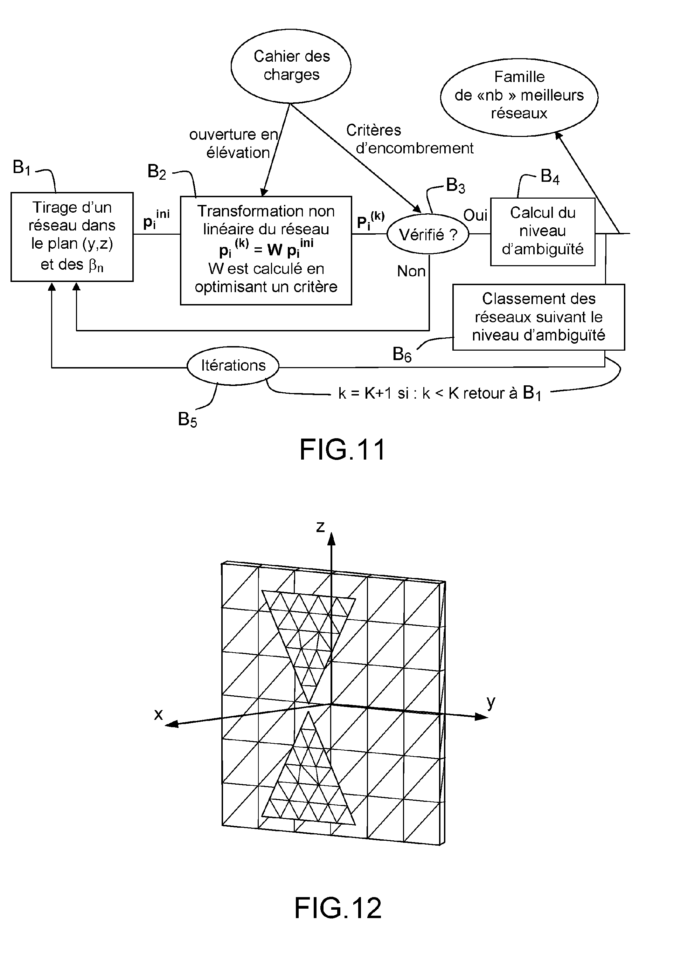

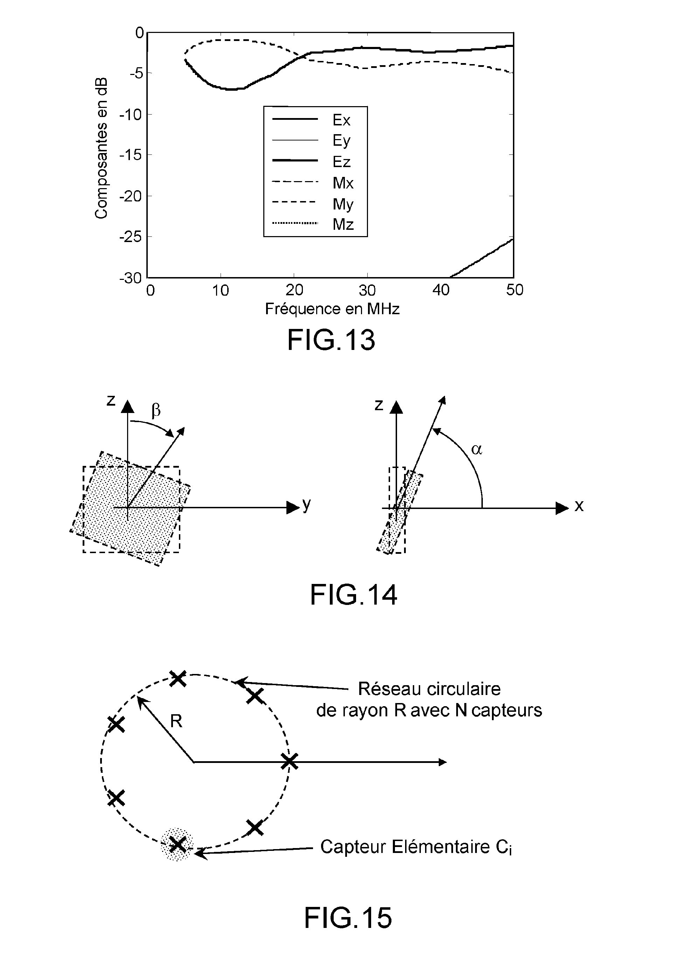

Cette estimation a été testée sur l'antenne papillon verticale de la figure 12 et le résultat est donné à la figure 13 où les composantes électriques et magnétiques normalisées sont tracées en dB en fonction de la fréquence. Pour cette antenne on constate qu'il existe seulement 2 composantes dominantes : La composante électrique suivant z et la composante magnétique suivant l'axe y.

La modélisation de l'équation (10) présente comme avantage de permettre de déduire par de simple rotations matricielles le gain d'une antenne ayant subit une rotation β dans le plan (y, z) puis une rotation α dans le plan (x, z) comme indiqué par la figure 14. Le lien entre les composantes électriques et magnétiques d'une antenne ayant subit une rotation (α, β) et les composantes électriques et magnétiques de l'antenne initiale est le suivant

$$\mathbf{g}(\alpha,\beta) = \begin{bmatrix} E_x(\alpha,\beta) \\ E_y(\alpha,\beta) \\ E_z(\alpha,\beta) \\ M_x(\alpha,\beta) \\ M_y(\alpha,\beta) \\ M_z(\alpha,\beta) \end{bmatrix} = \begin{bmatrix} rot(\alpha) & 0 \\ 0 & rot(\alpha) \end{bmatrix} \begin{bmatrix} rot(\beta) & 0 \\ 0 & rot(\beta) \end{bmatrix} \begin{bmatrix} E_x \\ E_y \\ E_z \\ M_x \\ M_y \\ M_z \end{bmatrix} \tag{14}$$

où l'expression des matrices de rotations sont les suivantes d'après la figure 14.

$$rot(\alpha) = \begin{bmatrix} \cos(\alpha) & 0 & -\sin(\alpha) \\ 0 & 1 & 0 \\ \sin(\alpha) & 0 & \cos(\alpha) \end{bmatrix} \quad \text{et} \quad rot(\beta) = \begin{bmatrix} 1 & 0 & 0 \\ 0 & \cos(\beta) & \sin(\beta) \\ 0 & -\sin(\beta) & \cos(\beta) \end{bmatrix} \tag{15}$$

Le gain d'une antenne ayant subit une rotation (α, β) s'écrit alors :

$$G(\Theta,\mathbf{P}) = \mathbf{g}(\alpha,\beta)^T \mathbf{u}(\Theta,\mathbf{P}) \quad \text{avec} \quad \mathbf{u}(\Theta,\mathbf{P}) = \begin{bmatrix} G_x^{dipole}(\Theta,\mathbf{P}) \\ G_y^{dipole}(\Theta,\mathbf{P}) \\ G_z^{dipole}(\Theta,\mathbf{P}) \\ G_x^{boucle}(\Theta,\mathbf{P}) \\ G_y^{boucle}(\Theta,\mathbf{P}) \\ G_z^{boucle}(\Theta,\mathbf{P}) \end{bmatrix} \tag{16}$$

où le vecteur $\mathbf{u}(\Theta,\mathbf{P})$ est directement dépendant des vecteurs $\mathbf{k}_V(\Theta)$ et $\mathbf{k}_H(\Theta)$ ainsi que des composantes de la polarisation :

$$\mathbf{u}(\Theta, \mathbf{P}) = P_V \times \mathbf{u}_V(\Theta) + P_H \times \mathbf{u}_H(\Theta)$$

$$\text{avec} \begin{cases} \mathbf{u}_V(\theta, \Delta) = \begin{bmatrix} \mathbf{k}_V(\Theta) \\ \mathbf{k}_H(\Theta) \end{bmatrix} \\ \mathbf{u}_H(\theta, \Delta) = \begin{bmatrix} \mathbf{k}_H(\Theta) \\ -\mathbf{k}_V(\Theta) \end{bmatrix} \end{cases} \tag{17}$$

**Modélisation du vecteur directeur d'un réseau hétérogène ayant subi des rotations ($\alpha_n$, $\beta_n$)**

D'après (14)(16), le gain de la n-ième antenne d'un réseau qui a subi une rotation ($\alpha_n$, $\beta_n$) avec les composantes électriques et magnétiques **em** = $[E_x\ E_y\ E_z\ M_x\ M_y\ M_z]^T$ s'écrit:

$$G_n(\Theta, \mathbf{P}) = \mathbf{g}(\alpha_n, \beta_n)^T \mathbf{u}(\Theta, \mathbf{P})$$

$$\text{sachant que } \mathbf{g}(\alpha_n, \beta_n) = \begin{bmatrix} rot(\alpha_n) & 0 \\ 0 & rot(\alpha_n) \end{bmatrix} \begin{bmatrix} rot(\beta_n) & 0 \\ 0 & rot(\beta_n) \end{bmatrix} \mathbf{em} \tag{18}$$

Le procédé selon l'invention va déterminer le gain Gn d'un capteur d'indice $n$ de position **p**n ayant subi une rotation ($\alpha_n$, $\beta_n$) en utilisant la formule (18). Dans ces conditions le vecteur directeur d'un réseau hétérogène s'écrit d'après (3) comme une combinaison de la matrice diagonale des composantes des vecteurs directeurs $a_n^{homogene}(\Theta)$ du réseau homogène, de la matrice de gain **G** des antennes contenant les $\mathbf{g}(\alpha_n, \beta_n)$ et du vecteur **u**($\Theta$,**P**) directement dépendant des vecteurs $\mathbf{k}_V(\Theta)$ et $\mathbf{k}_H(\Theta)$ ainsi que des composantes de la polarisation :

$$\mathbf{a}(\Theta, \mathbf{P}) = \Phi(\Theta) \times \mathbf{G} \times \mathbf{u}(\Theta, \mathbf{P}) \tag{19}$$

où

$$\Phi(\Theta) = \begin{bmatrix} a_1^{homogene}(\Theta) & 0 & 0 \\ 0 & \ddots & 0 \\ 0 & 0 & a_N^{homogene}(\Theta) \end{bmatrix} \text{ et } \mathbf{G} = \begin{bmatrix} \mathbf{g}(\alpha_1, \beta_1)^T \\ \vdots \\ \mathbf{g}(\alpha_N, \beta_N)^T \end{bmatrix} \tag{20}$$

Sachant que $a_n^{homogene}(\Theta) = \exp(j(2\pi/\lambda)\mathbf{k}(\Theta)^H \mathbf{p}_n)$ la réponse du réseau au n$^{ième}$ capteur d'un réseau homogène, on en déduit que le $n$-ième capteur d'un réseau hétérogène dépend de l'incidence $\Theta$, du vecteur **em** associé à l'antenne ainsi que du triplet $(\alpha_n, \beta_n, \mathbf{P}_n)$. Il est à noter que les caractéristiques algébriques de la matrice de gain **G** donneront la nature du réseau hétérogène vis à vis de la polarisation. Le réseau est à diversité de polarisation lorsque le rang de la matrice **G** est strictement supérieur à 1. Lorsque le rang de **G** est égale à 1, alors **G**=$\mathbf{g}_0\mathbf{v}^H$. On en déduit alors que **a** ($\Theta$, **P**) =$\Phi(\Theta)$x$\mathbf{g}_0$x$G_0(\Theta,\mathbf{P})$ avec $G_0(\Theta,\mathbf{P}) = \mathbf{v}^H\mathbf{u}(\Theta,\mathbf{P})$. On dira alors que l'on a un réseau à diversité de gains qui a la caractéristique de ne pas être à diversité de polarisation. Il existe parmi les réseaux à diversité de gain les réseaux homogènes où les composantes du vecteur $\mathbf{g}_0$ sont toutes égales. Dans ce cas le gain de l'antenne homogène de ce réseau vaut $G_0(\Theta,\mathbf{P}) = \mathbf{v}^H\mathbf{u}(\Theta,\mathbf{P})$. D'après (17)(19), le vecteur directeur d'un réseau hétérogène peut aussi s'écrire de la manière suivante :

$$\mathbf{G} \times \mathbf{u}(\Theta, \mathbf{P}) = (P_V \times \mathbf{G}_V + P_H \times \mathbf{G}_H)\mathbf{u}_V(\Theta) \text{ où } \begin{cases} \mathbf{G} = \mathbf{G}_V = [\mathbf{E}_n \quad \mathbf{M}_n] \\ \mathbf{G}_H = [-\mathbf{M}_n \quad \mathbf{E}_n] \end{cases} \tag{21}$$

L'objectif de l'optimisation de réseau est, notamment, de déterminer les triplets $(\alpha_n, \beta_n, \mathbf{p}_n)$ pour $(1 \le n \le N)$ qui

permettent d'obtenir les réseaux les moins ambiguës obéissant à un cahier des charges contenant des contraintes de performances et d'encombrement. Par exemple, si on souhaite dans le cahier des charges effectuer une goniométrie en diversité de polarisation il faut construire un réseau avec les $(\alpha_n, \beta_n, \mathbf{p}_n)$ donnant un rang de la matrice de gain **G** strictement supérieur à 1. On a un réseau à diversité de polarisation lorsqu' à partir de la connaissance d'une incidence $\Theta$, il est possible de déduire le vecteur de polarisation $\mathbf{P}=[P_V \, P_H]^T$ à partir du système d'équations (21). Cela est alors possible uniquement lorsque le rang de **G** est strictement supérieur à 1. Dans le cas contraire on a un réseau pondéré voir homogène lorsque les gains constants sont égaux.

**Outils d'omni-directionalité et de précision déduites des performances mono-source.**

A partir du document intitulé « on the asymptotic performance analysis of subspace DOA estimation in the présence of modeling errors : case of MUSIC » ayant pour auteurs A.Ferréol, P.Larzabal et M.Viberg publié dans IEEE Trans.Signal Processing, 54(3) :907-920, Mar.2006, il est possible de montrer que la matrice de corrélation de $\Delta\psi_m$ $=\hat{\psi}_m$-$\psi_m$ a l'expression suivante pour une source de polarisation **P** et d'incidence $\psi_m$ .

$$MS_{\Psi_m} = E\left[\Delta\Psi_m\Delta\Psi_m^{\ T}\right] = \alpha\mathbf{H}\left(\Psi_m\right)^{-1}$$

$$\mathbf{H}\left(\Psi_m\right) = 2\dot{\mathbf{A}}^H\Pi\left(\Psi_m\right)\dot{\mathbf{A}}$$

avec

$$\dot{\mathbf{A}} = \left[\frac{\delta\mathbf{a}\left(\Psi_m,\mathbf{P}\right)}{\partial\Psi_m(1)} \quad \cdots \quad \frac{\delta\mathbf{a}\left(\Psi_m,\mathbf{P}\right)}{\partial\Psi_m(d)}\right] \tag{22}$$

$$\Pi\left(\Psi_m\right) = \mathbf{I}_N \ - \ \frac{\mathbf{a}\left(\Psi_m,\mathbf{P}\right)\mathbf{a}\left(\Psi_m,\mathbf{P}\right)^H}{\mathbf{a}\left(\Psi_m,\mathbf{P}\right)^H\mathbf{a}\left(\Psi_m,\mathbf{P}\right)}$$

Sachant que $\psi_m$ est un vecteur de dimension $d$x1. Les valeurs du coefficient $\alpha$ indiquées dans le tableau I suivant dépendent du type de performances considérées.

| Type de Performances | | Valeur du coefficient $\alpha$ |
|---|---|---|
| *Borne de Cramer RAO* | *Cas Stochastique* | $\alpha = \dfrac{1+\left(\dfrac{Nr_{ss}}{\sigma^2}\right)^{-1}}{K\left(\dfrac{r_{ss}}{\sigma^2}\right)}$  avec $r_{ss} = E\left[\left\|s_m\left(t_k\right)\right\|^2\right]$ |
| *A partir de x($t_k$) pour 1≤k≤K* | *Cas déterministe* | $\alpha = \dfrac{1}{K\left(\dfrac{\hat{r}_{ss}}{\sigma^2}\right)}$  avec $\hat{r}_{ss} = \dfrac{1}{K}\sum_{k=1}^{K}\left\|s_m\left(t_k\right)\right\|^2$ |
| *Performance de MUSIC* | *A temps d'intégration fini avec* **x** *($t_k$) pour 1≤k≤K* | $\alpha = \dfrac{1}{K\left(\dfrac{r_{ss}}{\sigma^2}\right)}$ |
| | *En présence d'erreur de modèle* | |

Tableau 1 : Tableau des paramètres à associer aux critères de précision mono-source sachant $E[n(t)n(t)^H] = \sigma^2 \mathbf{I}_N$ .

Généralement en présence d'un paramètre multi-dimensionnel $\psi_m$, les performances sont données suivant une ellipsoïde d'incertitude qui dépend des éléments propres de la matrice $MS_{\psi_m}$ qui revient à décomposer la variable $\Delta\psi_m$ en d variables indépendantes $\Delta\psi_m^{(i)}$ telles que :

$$MS_{\Psi_m} = \sum_{i=1}^{d} \left( \sigma_{\Psi_m^{(i)}} \right)^2 \mathbf{h}_{\Psi_m^{(i)}} \mathbf{h}_{\Psi_m^{(i)}}^{H}$$

où

$$\Delta\Psi_m^{(i)} = \mathbf{h}_{\Psi_m^{(i)}}^{H} \Delta\Psi_m \quad \text{avec} \quad \left( \sigma_{\Psi_m^{(i)}} \right)^2 = E\left[ \left( \Delta\Psi_m^{(i)} \right)^2 \right]$$

(23)

où $\left( \sigma_{\Psi_m^{(i)}} \right)^2$ et $\mathbf{h}_{\Psi_m^{(i)}}$ sont respectivement les valeurs propres et vecteurs propres de $MS_{\psi_m}$. Lorsque $d=2$ on obtient une ellipse ayant pour grand axe $\sigma_{\Psi_m^{(i_{max})}} = \max_i \left( \sigma_{\Psi_m^{(i)}} \right)$, petit axe $\sigma_{\Psi_m^{(i_{min})}} = \max_i \left( \sigma_{\Psi_m^{(i)}} \right)$ et orientation par rapport à la première composante de $\Delta\psi_m$ valant $\varphi = angle \left( \mathbf{h}_{\Psi_m^{(i)}}', [1 \quad 0]^T \right)$. Dans la suite du paragraphe le lien entre la matrice $MS_{\psi m}$ et les positions $\mathbf{p}_n$ et orientations $(\alpha_n, \beta_n)$ des capteurs est établie afin d'obtenir une relation avec les paramètres de l'ellipse. Le lien est établi dans un premier temps pour $\psi_m = \mathbf{k}(\Theta_m)$ . D'après (3)(18)(22), la matrice $\mathbf{H}(k(\Theta_m))$ s'écrit (calcul de la performance théorique, matrice d'ouverture du réseau):

$$\mathbf{H}\left( \mathbf{k}\left( \Theta_m \right) \right) = 2N \left( \frac{2\pi}{\lambda} \right)^2 \widetilde{\mathbf{D}}_{pp} \left( \mathbf{u}\left( \Theta_m, \mathbf{P}_m \right), \mathbf{G}, \mathbf{P}, \lambda \right)$$

$$\begin{cases} \widetilde{\mathbf{D}}_{pp} \left( \mathbf{u}, \mathbf{G}, \mathbf{P}, \lambda \right) = \mathbf{D}_{pp} \left( \mathbf{G}, \mathbf{u}, \mathbf{P} \right) + \left( \tilde{J}_u \left( \Theta \right)^T \mathbf{D}_{gg} \left( \mathbf{G}, \mathbf{u} \right) \tilde{J}_u \left( \Theta \right) \right) \times \left( \frac{2\pi}{\lambda} \right)^{-2} \\ \\ \tilde{J}_u \left( \Theta \right)^T = J \left( \Theta \right) \left( J \left( \Theta \right)^T J \left( \Theta \right) \right)^{-1} J_u \left( \Theta \right)^T \end{cases}$$

(24)

Il est à noter que $\mathbf{P}_m$ est le vecteur de polarisation de la m-ième source et que $\mathbf{P} = [\mathbf{p}_1 \cdots \mathbf{p}_N]$ est la matrice de position de $N$ antennes

où les matrices d'ouvertures $\mathbf{D}_{pp}$ ($\mathbf{G}$, $\mathbf{u}$, $\mathbf{P}$) puis $\mathbf{D}_{gg}$ ($\mathbf{G}$, $\mathbf{u}$) s'écrivent

$$\begin{cases} \mathbf{D}_{pp} \left( \mathbf{G}, \mathbf{u}, \mathbf{P} \right) = \mathbf{U}^H \Pi_g \mathbf{U} \\ \\ \mathbf{D}_{gg} \left( \mathbf{G}, \mathbf{u} \right) = \left( \frac{\mathbf{G}^H \mathbf{G}}{\mathbf{g}^H \mathbf{g}} \right) - \overline{\mathbf{g}} \overline{\mathbf{g}}^H \end{cases} \quad \text{avec} \quad \begin{cases} \overline{\mathbf{g}} = \frac{\mathbf{G}^H \mathbf{g}}{\mathbf{g}^H \mathbf{g}} \quad \text{et} \quad \mathbf{g} = \mathbf{Gu} \\ \\ \Pi_g = \mathbf{I}_N - \frac{\mathbf{g}\mathbf{g}^H}{\mathbf{g}^H \mathbf{g}} \\ \\ \mathbf{U} = \frac{diag \left( \mathbf{g} \right)}{\sqrt{\mathbf{g}^H \mathbf{g}}} \mathbf{P}^H \quad \text{avec} \quad \mathbf{P} = \begin{bmatrix} \mathbf{p}_1 & \cdots & \mathbf{p}_N \end{bmatrix} \end{cases}$$

(25)

Les matrices $J$ ($\Theta$) et $J_u$ ($\Theta$) sont les Jacobien suivants :

$$\partial\big(\mathbf{k}(\Theta)\big) = J(\Theta)\partial\Theta$$

et

$$\partial\big(\mathbf{u}(\Theta,\mathbf{P})\big) = J_u(\Theta)\partial\Theta \quad \text{avec } J_u(\Theta) = P_V \times \begin{bmatrix} J_V(\Theta) \\ J_H(\Theta) \end{bmatrix} + P_H \times \begin{bmatrix} -J_H(\Theta) \\ J_V(\Theta) \end{bmatrix} \tag{26}$$

où $\partial\Theta$ est la différentielle du vecteur $\Theta$. Sachant que $\partial\,(\mathbf{k}_V\,(\Theta)) = J_V\,(\Theta)\partial\Theta$ et $\partial\,(\mathbf{k}_H\,(\Theta)) = J_H\,(\Theta)\partial\Theta$, on en déduit que :

$$J(\Theta) = \begin{bmatrix} -\sin(\theta)\cos(\Delta) & -\cos(\theta)\sin(\Delta) \\ \cos(\theta)\cos(\Delta) & -\sin(\theta)\sin(\Delta) \\ 0 & \cos(\Delta) \end{bmatrix}$$

$$J_V(\Theta) = \begin{bmatrix} \sin(\theta)\sin(\Delta) & -\cos(\theta)\cos(\Delta) \\ -\cos(\theta)\sin(\Delta) & -\sin(\theta)\cos(\Delta) \\ 0 & -\sin(\Delta) \end{bmatrix} \tag{27}$$

$$J_H(\Theta) = \begin{bmatrix} \cos(\theta) & 0 \\ \sin(\theta) & 0 \\ 0 & 0 \end{bmatrix}$$

et en posant $\mathbf{u}_m = \mathbf{u}(\Theta_m,\mathbf{P}_m)$

$$\mathrm{MS}_{\mathbf{k}(\Theta_m)} = \frac{\alpha}{2N\left(\dfrac{2\pi}{\lambda}\right)^2}\big(\widetilde{\mathbf{D}}_{pp}\,(\mathbf{u}_m,\mathbf{G},\mathbf{P},\lambda)\big)^{-1}$$

$$\text{et } \mathrm{MS}_{\Theta_m} = \frac{\alpha}{2N\left(\dfrac{2\pi}{\lambda}\right)^2}\big(J\,(\Theta_m)^T\,\widetilde{\mathbf{D}}_{pp}\,(\mathbf{u}_m,\mathbf{G},\mathbf{P},\lambda)\,J\,(\Theta_m)\big)^{-1} \tag{28}$$

En présence d'un réseau homogène où $\mathbf{G}^T = \mathbf{v}\times[1\cdots1]^H$, on en déduit que $\mathbf{D}_{gg}\,(\mathbf{G},\mathbf{u}) = 0$ d'après (25) et donc avec $\mathbf{P}=[\mathbf{p}_1\dots\mathbf{p}_N]$ la matrice des positions des antennes du réseau

$$\widetilde{\mathbf{D}}_{pp}\,(\mathbf{u}_m,\mathbf{G},\mathbf{P},\lambda) = \mathbf{D}_{pp}\,(\mathbf{G},\mathbf{u},\mathbf{P}) = \mathbf{D}_{pp} = \frac{1}{N}\sum_{n=1}^{N}(\mathbf{p}_n - \overline{\mathbf{p}})(\mathbf{p}_n - \overline{\mathbf{p}})^T$$

$$\text{avec } \overline{\mathbf{p}} = \frac{1}{N}\sum_{n=1}^{N}\mathbf{p}_n \tag{29}$$

Cette dernière expression montre que pour les réseaux homogènes que la matrice de covariance d'erreur d'estimation du vecteur d'onde $\mathrm{MS}_{\mathbf{k}(\Theta_m)}$ est indépendante de ce vecteur d'onde $\mathbf{k}\,(\Theta_m)$ et dépend uniquement de la position $\mathbf{p}_n$ des capteurs du réseau.

En rappelant que :

$$\mathrm{MS}_{\Theta_m} = \begin{bmatrix} \left( EQM_{\theta_m} \right)^2 & \\ & \left( EQM_{\Delta_m} \right)^2 \end{bmatrix} \tag{30}$$

où $EQM_{\theta m}$ et $EQM_{\Delta m}$ sont respectivement les précisions en azimut et élévation, il a été décrit dans les deux demandes de brevet précitées un sous-procédé pour les réseaux homogènes permettant d'obtenir une matrice $D_{pp}^{directif}$ où les précisions requises par le cahier des charges sont exactement $EQM_{\theta_m}$ et $EQM_{\Delta_m}$. En conséquence, à partir d'un premier jeu de positions $\mathbf{p}_n^{ini}$ des capteurs tiré aléatoirement, il est possible d'effectuer la transformation suivante pour obtenir un réseau dont les précisions en azimut et élévation sont les valeurs $EQM_{\theta_m}$ et $EQM_{\Delta_m}$ du cahier des charges

$$\mathbf{p}_n = \left( \mathbf{D}_{pp}^{\;directif} \right)^{1/2} \left( \mathbf{D}_{pp}^{\;ini} \right)^{-1/2} \left( \mathbf{p}_n^{\;ini} - \overline{\mathbf{p}}^{ini} \right)$$

$$\text{où} \begin{cases} \mathbf{D}_{pp}^{\;ini} = \dfrac{1}{N} \sum_{n=1}^{N} \left( \mathbf{p}_n^{\;ini} - \overline{\mathbf{p}}^{ini} \right) \left( \mathbf{p}_n^{\;ini} - \overline{\mathbf{p}}^{ini} \right)^T \\[2mm] \text{avec } \overline{\mathbf{p}}^{ini} = \dfrac{1}{N} \sum_{n=1}^{N} \mathbf{p}_n^{\;ini} \end{cases} \tag{31}$$

Dans le cas d'un réseau hétérogène où

$$\widetilde{\mathbf{D}}_{pp} \left( \mathbf{u}\left( \Theta, \mathbf{P}_{Polar} \right), \mathbf{G}\left( \boldsymbol{\alpha}, \boldsymbol{\beta} \right), \mathbf{P}, \lambda \right) = \mathbf{D}_{Polar} \left( \Theta, \boldsymbol{\alpha}, \boldsymbol{\beta}, \mathbf{P}, \lambda \right)$$

$$\text{sachant que} \begin{cases} \boldsymbol{\alpha} = \begin{bmatrix} \alpha_1 & \cdots & \alpha_N \end{bmatrix}^T \\ \boldsymbol{\beta} = \begin{bmatrix} \beta_1 & \cdots & \beta_N \end{bmatrix}^T \\ \mathbf{P} = \begin{bmatrix} \mathbf{p}_1 & \cdots & \mathbf{p}_N \end{bmatrix} \end{cases} \tag{32}$$

$G(\alpha,\beta)$ est la matrice de gain du réseau composée de l'ensemble des gains $G_n(\alpha_n, \beta_n)$ d'un capteur n ayant subi une rotation $(\alpha_n, \beta_n)$.
est une fonction de la direction $\Theta$, de la polarisation $\mathbf{P}_{Polar}$, des angles de rotations $\alpha$, $\beta$ et de la matrice de position $\mathbf{P} = [\mathbf{p}_1 \cdots \mathbf{p}_N]$ des capteurs, on va déterminer N triplets $(\alpha_n, \beta_n, \mathbf{p}_n)$ tel que la matrice d'ouverture:

$$\mathbf{D}_{pp}^{\;directif} = \mathbf{D}_{Polar} \left( \Theta, \boldsymbol{\alpha}, \boldsymbol{\beta}, \mathbf{P}, \lambda \right) \quad \text{sachant que} \begin{cases} \boldsymbol{\alpha} = \begin{bmatrix} \alpha_1 & \cdots & \alpha_N \end{bmatrix}^T \\ \boldsymbol{\beta} = \begin{bmatrix} \beta_1 & \cdots & \beta_N \end{bmatrix}^T \end{cases} \text{ et } Polar\text{=V ou H} \tag{33} \; .$$

On note $\mathbf{D}_{Polar}(\Theta,\mathbf{G},\mathbf{P},\lambda) = \mathbf{D}_V(\Theta,\mathbf{G},\mathbf{P},\lambda)$ en polar V lorsque $\mathbf{P}_{Polar} = [P_V\; 0]^T$ et $\mathbf{D}_{Polar}(\Theta,\mathbf{G},\mathbf{P},\lambda) = \mathbf{D}_H(\Theta,\mathbf{G},\mathbf{P},\lambda)$ en polar H lorsque $\mathbf{P}_{Polar} = [0\; P_H]^T$. à le procédé va ensuite minimiser le critère suivant :

$$\left( \hat{\boldsymbol{\alpha}}, \hat{\boldsymbol{\beta}}, \hat{\mathbf{P}} \right) = \min_{(\boldsymbol{\alpha}, \boldsymbol{\beta}, \mathbf{P})} J\left( \boldsymbol{\alpha}, \boldsymbol{\beta}, \mathbf{P} \right)$$

$$\text{sachant que } J\left( \boldsymbol{\alpha}, \boldsymbol{\beta}, \mathbf{P} \right)^2 = \int_{\Theta, Polar=V,H} \left\| \mathbf{D}_{pp}^{\;directif} - \mathbf{D}_{Polar} \left( \Theta, \boldsymbol{\alpha}, \boldsymbol{\beta}, \mathbf{P}, \lambda \right) \right\|_2 \tag{34}$$

$$\text{où } \left\| \mathbf{A} \right\|_2 = \sum_{i,j} \frac{\left| \mathbf{A}(i,j) \right|^2}{N^2}$$

Où A est une matrice de dimension NxN afin d'obtenir les triplets $(\alpha_n, \beta_n, \mathbf{p_n})$

Cette optimisation peut se faire de deux manières :

- Soit de manière directe en cherchant dans tout l'espace des paramètres ($\alpha_n$,$\beta_n$,$\mathbf{p}_n$) pour *1≤n≤N*

- Soit de manière itérative en initialisant les positions $\mathbf{p}_n$ par le processus de l'équation (31) en supposant être en présence d'un réseau homogène. L'étape suivant consiste à chercher dans l'espace des ($\alpha$, $\beta$) en fixant les valeurs des positions $\mathbf{p}_n$ . L'étape suivante consiste à rechercher les $\mathbf{p}_n$ en fixant les valeurs des ($\alpha_n$,$\beta_n$). Le processus est ensuite réitéré jusqu'à ce que l'écart entre $\mathbf{D}_{pp}^{\ directif}$ et $\mathbf{D}_{Polar}$ ($\Theta$,$\alpha$,$\beta$,$\mathbf{P}$,$\lambda$) soit suffisamment faible Sachant que le critère $J(\hat{\alpha},\hat{\beta},\hat{\mathbf{P}})$ est proportionnel à une distance au carré. On peut prendre par exemple le seuil d'acceptation des paramètres $\hat{\alpha},\hat{\beta},\hat{\mathbf{P}}$, suivant

$$J\left(\hat{\mathbf{\alpha}},\hat{\mathbf{\beta}},\hat{\mathbf{P}}\right)\le 0.1\frac{trace\left(\mathbf{D}_{pp}\right)}{N} \tag{35}$$

où $\mathbf{D}_{pp}$ est définit équation (29).

**Exemple de l'optimisation d'un réseau hétérogène sur le cylindre de la figure 5**

L'objectif est d'installer sur le cylindre des antennes planes Ci conformes. La conformité des antennes impose les relations suivantes entre les différents paramètres du problème

$$x_n = \sqrt{\left(R_a\right)^2 - \left(z_n\right)^2}$$
$$\alpha_n = angle\left(x_n + jz_n\right) \tag{36}$$

En conséquence, à partir de la connaissance de la valeur de $z_n$ des capteurs sur l'axe des z., il est possible d'obtenir l'angle d'orientation $\alpha_n$ ainsi que les positions $x_n$ des capteurs sur l'axe des x. Les paramètres de recherche de l'optimisation de réseaux sont alors réduits aux angles $\beta_n$ d'orientation des capteurs dans le plan (y, z) ainsi que les positions ($y_n$, $z_n$) des antennes dans le plan (y, z). Dans le processus d'optimisation de réseau de ci-dessous :

- Les valeurs des angles $\beta_n$ de rotation de chacun des capteurs dans le plan (y, z) sont fixée,
- La position des capteurs sur l'axe des z est paramétrée par ($z_0$,$\rho$) de la manière suivante :

$$z_n = z_0 + \rho\left(z_n^{\ ini} - \min_n\left(z_n^{\ ini}\right)\right) \tag{37}$$

où ($y_n^{ini}$, $z_n^{ini}$) sont les positions du réseau d'antenne hétérogène dans le plan (y, z) tel que $\mathbf{D}_{pp}^{\ directif} = \mathbf{D}_{pp}$.

Dans ces conditions, la matrice $\mathbf{D}_{Polar}$ ($\Theta$, $\alpha$, $\beta$, $\mathbf{P}$, $\lambda$) sur laquelle porte l'optimisation n'est plus qu'une fonction des coordonnées ($y_n$, $z_n$) dans le plan ($y$,$z$) car $\mathbf{p}_n$ et $\alpha_n$ sont des fonctions de ($y_n$, $z_n$). Ainsi on obtient la fonction réduite suivante

$$\mathbf{D}_{Polar}\left(\Theta,\mathbf{\alpha}=f\left(\mathbf{P}\right),\mathbf{\beta},\mathbf{P}\left(\mathbf{y},\mathbf{z}\right),\lambda\right) = \mathbf{D}_{Polar}\left(\Theta,\mathbf{y},\mathbf{z},\lambda\right)$$

$$\text{où} \begin{cases} \mathbf{y} = \left[\begin{matrix} y_1 & \cdots & y_N \end{matrix}\right]^T \\ \mathbf{z} = \left[\begin{matrix} z_1 & \cdots & z_N \end{matrix}\right]^T \end{cases} \tag{38}$$

En fixant la matrice $\mathbf{D}_{pp}^{\ directif}$ de la manière suivante :

$$\mathbf{D}_{pp}{}^{directif} = \begin{bmatrix} D_{xx} & 0 & D_{xz} \\ 0 & D_{yy} & 0 \\ D_{xz} & 0 & D_{zz} \end{bmatrix} \text{ avec } \underline{\mathbf{D}}_{pp}{}^{directif} = \begin{bmatrix} D_{yy} & D_{yz} \\ D_{yz} & D_{zz} \end{bmatrix} \tag{39}$$

La recherche de la position optimale des $y_n$ est rendue indépendante de la recherche des coordonnées ($x_n$, $z_n$). On peut alors envisager les étapes suivantes pour obtenir un réseau hétérogène où $\mathbf{D}_{pp}{}^{directif} = \mathbf{D}_{polar}$ ($\Theta$, $\mathbf{y}$, $\mathbf{z}$, $\lambda$) à partir d'une initialisation du processus avec le réseau homogène où $\mathbf{D}_{pp}{}^{directif} = \mathbf{D}_{pp}$ où les positions des capteurs sont ($y_n{}^{ini}$, $z_n{}^{ini}$). Le processus d'optimisation porte sur le couple de paramètres ($z_0$, $\rho$) qui conditionne la position des capteurs sur l'axe des z. Plus précisément les étapes du procédé sont les suivantes

**Etape n˚A.1 :** Tirage aléatoire des positions d'antennes $\mathbf{p}_n{}^0 = [y_n{}^0\ z_n{}^0]^T$

**Etape n˚A.2 :** Calcul de $\mathbf{D}_{pp}$ avec les positions $\mathbf{p}_n{}^0$

**Etape n˚A.3 :** Transformation des positions $\mathbf{p}_n{}^0$ pour obtenir la matrice $\underline{\mathbf{D}}_{pp}{}^{directif}$ des ouvertures équivalentes en effectuant $\mathbf{p}_n{}^{ini} = [y_n{}^{ini}\ z_n{}^{ini}]^T = (\underline{\mathbf{D}}_{pp}{}^{directif})^{1/2}\ (\mathbf{D}_{pp})^{-1/2}\ (\mathbf{p}_n{}^0 - \overline{\mathbf{p}}^0)$

- Boucle sur ($z_0$, $\rho$) tel que $z_n = z_0 + \rho(z_n{}^{ini} - \min(z_n{}^{ini}))$

   **Etape n˚A.4.1 :** Calcul de $x_n$ en fonction de $z_n$

   **Etape n˚A.4.2 :** Calcul de $\alpha_n$ en fonction de $x_n$ et $z_n$

   **Etape n˚A.4.3 :** Déduction de $\mathbf{p}_n = [x_n\ y_n{}^{ini}\ z_n]^T$

   **Etape                 n˚A.4.4 :**                 Connaissant                 les                 $\beta_n$                 calculer

   $$\left(\Delta\mathbf{D}(z_0,\rho)\right)^2 = \int\limits_{\Theta,Polar=V,H} \left\| \mathbf{D}_{pp}{}^{directif} - \mathbf{D}_{Polar}\left(\Theta, \mathbf{y}(z_0,\rho), \mathbf{z}(z_0,\rho), \lambda\right) \right\|_2$$   (la notation $\|.\|_2$ est définie équation (34))

   **Etape n˚A.4.5:** A la première valeur de $(\underline{z_0,\rho})$ initialisation avec

   $$\begin{cases} \Delta\mathbf{D}_{opt} = \Delta\mathbf{D}(z_0,\rho) \\ (\hat{z}_0, \hat{\rho}) = (z_0, \rho) \end{cases}$$

   **Etape n˚A.4.6:** Si $|\Delta\mathbf{D}_{opt}| > |\Delta\mathbf{D}(z_0,\rho)|$ alors $(\hat{z}_0, \hat{\rho}) = (z_0, \rho)$

- Fin de la Boucle sur ($z_0$, $\rho$)

   **Etape n˚A.4.6 :** Calcul de $z_n, x_n$ et $\alpha_n$ sachant $z_0 = \hat{z}_0$ et $\hat{\rho} = \rho$

   **Etape n˚A.4.7:** Déduction des positions optimales $\mathbf{p}_n = [x_n\ y_n{}^{ini}\ z_n]^T$

**Ambiguïté de réseau**

L'objectif est d'établir un contraste entre le niveau des lobes principaux et celui des lobes secondaires du critère MUSIC. La goniométrie est ambiguë lorsque l'algorithme détecte l'incidence d'un des lobes secondaires à la place du lobe principal. Les critères d'ambiguïtés peuvent se faire dans l'espace des composantes du vecteur d'onde.

En présence d'une source d'incidence $\Theta_1$, un réseau est mathématiquement ambiguë à l'ordre 1 lorsqu'il existe une incidence $\Theta$ pour laquelle les vecteurs $\mathbf{a}$ ($\Theta_1, P_1$) et $\mathbf{a}(\Theta, \mathbf{P})$ soient colinéaires. Dans ces conditions la projection du vecteur directeur $\mathbf{a}$ ($\Theta, \mathbf{P}$) sur le vecteur $\mathbf{a}$ ($\Theta_1, P_1$) est nulle :

$$Diag_\lambda\left(\mathbf{a}_\lambda(\Theta_1, P_1), \mathbf{a}_\lambda(\Theta, P)\right) = 0 = \frac{\mathbf{a}_\lambda(\Theta, P)^H\ \Pi\left(\mathbf{a}_\lambda(\Theta_1, P_1)\right)\mathbf{a}_\lambda(\Theta, P)}{N} \tag{40}.$$

Où II ($\mathbf{A}$) est le projecteur sur l'espace engendré par les colonnes de $\mathbf{A}$ tel que

$$\Pi(\mathbf{A}) = \mathbf{I}_N - \mathbf{A}\left(\mathbf{A}^H\mathbf{A}\right)^{-1}\mathbf{A}^H \tag{41}.$$

et où $\mathbf{a}_\lambda$ ($\Theta, P$) est le vecteur directeur pour la longueur d'onde $\lambda$ tel que :

$$\mathbf{a}_{\lambda}\left(\Theta,P\right)=\begin{bmatrix} a_{1\lambda}\left(\Theta,P\right)\\ \vdots\\ a_{N\lambda}\left(\Theta,P\right)\end{bmatrix}\quad\text{avec}\quad a_{n\lambda}\left(\Theta,P\right)=G_{n}\left(\Theta,P\right)\exp\left(j\frac{2\pi}{\lambda}\mathbf{k}\left(\Theta,P\right)^{T}\mathbf{p}_{n}\right) \tag{42}.$$

Sachant qu'en diversité de polarisation

$$\mathbf{a}_{\lambda}\left(\Theta,P\right)=P_{V}\mathbf{a}_{V,\lambda}\left(\Theta,P\right)+P_{H}\mathbf{a}_{H,\lambda}\left(\Theta,P\right) \tag{43}$$

où

$$\mathbf{a}_{V,\lambda}\left(\Theta\right)=\Phi\left(\Theta\right)\times\mathbf{G}_{V}\quad\text{et}\quad\mathbf{a}_{H,\lambda}\left(\Theta\right)=\Phi\left(\Theta\right)\times\mathbf{G}_{H} \tag{44}$$

On en déduit d'après (40) que

$$J_{\lambda}\left(\Theta_{1},\Theta\right)=0=\frac{\det\left(\mathbf{Q}_{1}\left(\Theta_{1},\Theta\right)\right)}{\det\left(\mathbf{Q}_{2}\left(\Theta_{1},\Theta\right)\right)}\quad\text{avec}\quad\begin{cases}\mathbf{Q}_{1}\left(\Theta_{1},\Theta\right)=\mathbf{U}\left(\Theta\right)^{H}\Pi_{DP}\left(\Theta_{1}\right)\mathbf{U}\left(\Theta\right)\\ \mathbf{Q}_{2}\left(\Theta_{1},\Theta\right)=\mathbf{U}\left(\Theta\right)^{H}\mathbf{U}\left(\Theta\right)\end{cases} \tag{45}.$$

Où

$$\Pi_{DP}\left(\Theta_{1}\right)=\Pi\left(\mathbf{U}\left(\Theta_{1}\right)\right)\quad\text{et}\quad\mathbf{U}\left(\Theta\right)=\begin{bmatrix}\mathbf{a}_{V,\lambda}\left(\Theta\right) & \mathbf{a}_{H,\lambda}\left(\Theta\right)\end{bmatrix} \tag{46}.$$

Comme $J_{\lambda}\left(\Theta_{1},\Theta\right)$ est compris entre 0 et 1 et qu'il existe une ambiguïté mathématique lorsque $J_{\lambda}(\Theta_{1},\Theta)=0$, le critère de robustesse aux ambiguïtés d'ordre 1 noté $\eta_{1}(\lambda)$ dépendant de la longueur d'onde $\lambda$ de la manière suivante :

$$\eta_{1}\left(\lambda\right)=\min_{\Theta_{1}}\eta_{1}\left(\lambda,\Theta_{1}\right)$$

$$\eta_{1}\left(\lambda,\Theta_{1}\right)=\min_{\substack{\Theta\\ \Theta\neq\Theta_{1}}}\left(J_{\lambda}\left(\Theta_{1},\Theta\right)\right) \tag{47}$$

La robustesse aux ambigüités d'ordre 1 sur toute une gamme de fréquence vaut alors

$$\eta=\min_{\lambda}\eta_{1}\left(\lambda\right) \tag{48}.$$

Le schéma de la figure 11 donne un exemple de processus d'optimisation d'un réseau hétérogène.

Les critères de performances du cahier des charges donnant une précision en azimut ($EQM_{\theta m}$) et élévation ($EQM_{\Delta m}$) se traduisent mathématiquement par la matrice $\underline{\mathbf{D}}_{pp}{}^{directif}$ (voir équations (28)(30)) sachant que :

$$\mathrm{MS}_{\Theta_{m}}=\begin{bmatrix}\left(EQM_{\theta_{m}}\right)^{2}\\ & \left(EQM_{\Delta_{m}}\right)^{2}\end{bmatrix}=\frac{\alpha}{2N\left(\dfrac{2\pi}{\lambda}\right)^{2}}\left(J\left(\Theta_{m}\right)^{T}\mathbf{D}_{pp}{}^{directif}J\left(\Theta_{m}\right)\right)^{-1} \tag{49}$$

L'objectif de l'optimisation est de trouver les *nb* meilleur réseaux en terme d'ambiguïté parmi un total de K réseaux vérifiant les contraintes du cahier des charges en terme de performances et d'encombrement. Sachant que typiquement nb=10 et K>2000, les étapes du procédé dans le cas général sont les suivantes :

**Initialisation** : *k*=1 ;

**Etape B.1 :** Tirage d'un réseau ayant des capteurs de position $\mathbf{p}_i^{ini}$. Cela donne une matrice initiale de position des capteurs : $\mathbf{P}^{ini}= [\mathbf{p}_1^{ini} \cdots \mathbf{p}_N^{ini}]$. Tirage aléatoire des vecteurs d'orientations $\beta^{(k)}$ et $\alpha^{(k)}$. Dans le cas particulier des étapes A, le vecteur $\alpha^{(k)}$ n'est pas tiré aléatoirement car il est dépendant de la matrice $\mathbf{P}^{(k)}$ des positions.

**Etape B.2 :** Recherche de la matrice de transformation $\mathbf{W}$ qui minimise le critère $J$ ($\alpha$, $\beta$, $\mathbf{P} = \mathbf{WP}^{ini}$) de l'équation (34). La matrice $\hat{\mathbf{W}}$ qui minimise le critère $J$ ($\alpha$, $\beta$, $\mathbf{P} = \mathbf{WP}^{ini}$) donne la position des capteurs d'un réseau $\mathbf{P}^{(k)} = [\mathbf{p}_1^{(k)} ... \mathbf{p}_N^{(k)}] = \mathbf{WP}^{ini}$. Dans l'exemple de l'optimisation d'antenne conforme sur un cylindre la matrice $\mathbf{W}$ **est** paramétrée par ($z_0$,$\rho$).

**Etape B.3 :** vérifier que le réseau de positions $\mathbf{P}^{(k)}$ vérifiant les contraintes de performances du cahier des charges vérifie aussi les contraintes d'encombrement du cahier des charges. Si ce n'est pas le cas on retourne à l'étape B1.

**Etape B.4 :** calcul du niveau d'ambiguïtés $\eta_1^{(k)} = \min_\lambda \eta_1 \left(\lambda\right)^{(k)}$ du réseau paramétré par ($\alpha^{(k)}$, $\beta^{(k)}$, $\mathbf{P}^{(k)}$) selon les équations (47) (45) et stockage du réseau (positions et orientations des capteurs sélectionnés lors de l'étape B.1)

**Etape B.5 :** *k*=*k*+1. Si *k*<*K* retour à l'étape B1.

**Etape B.6 :** connaissant le niveau d'ambiguïtés $\eta_1^{(k)}$ de tous les réseaux vérifiant les contraintes d'encombrement et de performances paramétrées par ($\alpha^{(k)}$, $\beta^{(k)}$, $\mathbf{P}^{(k)}$), classement de l'ensemble des réseaux suivant le niveau d'ambigüité et conservation des *nb* meilleurs ayant les plus fortes valeurs de $\eta_1^{(k)}$.

Les étapes permettant d'obtenir le niveau d'ambigüités $\eta_1$ $(\lambda)^{(k)}$ à partir des paramètres ($\alpha^{(k)}$, $\beta^{(k)}$, $\mathbf{P}^{(k)}$) du réseau sont les suivantes

**Etape C.1 :** calcul de la matrice de gain $\mathbf{G}$ à partir du couple de vecteur ($\alpha^{(k)}$, $\beta^{(k)}$) selon l'équation (20). A partir de $\mathbf{G}$, déduction de $\mathbf{G_v}$ et $\mathbf{G_H}$ selon l'équation (21).
**Etape C.2 :** à partir de la connaissance de $\mathbf{P}^{(k)}$, calcul des matrices $\Phi$ ($\Theta$) de l'équation (20) en fonction de l'incidence $\Theta$.
**Etape C.3 :** calcul de $\mathbf{a}_{V,\lambda}$ ($\Theta$) et $\mathbf{a}_{H,\lambda}$ ($\Theta$) selon (44) à partir de $\Phi$ ($\Theta$), $\mathbf{G_v}$ et $\mathbf{G_H}$.

Boucle sur $\Theta_1$:

**Etape C.4:** Calcul du critère $J_\lambda$ ($\Theta_1$,$\Theta$) de l'équation (45)
**Etape C.5 :** Calcul de $\eta_1(\lambda,\Theta_1)$ suivant (47)

Fin de la boucle sur $\Theta_1$:

**Etape C.6 :** Minimisation de $\eta_1$ ($\lambda$,$\Theta_1$) en $\Theta_1$ pour obtenir $\eta_1$ $(\lambda)^{(k)}$.

La solution proposée met en oeuvre un procédé et un système d'optimisation d'un réseau de capteurs à partir d'un cahier des charges. Cette solution comprend notamment:

• La modélisation en incidence et polarisation du gain d'une antenne en fonction de son orientation ($\alpha_n$, $\beta_n$) et de sa nature physique.

• l'établissement de liens mathématiques reliant la directivité du réseau et la précision de goniométrie à la géométrie du réseau de capteurs qui dépend du triplet ($\mathbf{p_n}$, $\alpha_n$, $\beta_n$).

• La détermination des ambiguïtés d'ordre 1 et d'ordre supérieurs à 1 d'un réseau en diversité de polarisation.

• La mise en oeuvre d'un processus d'optimisation de la géométrie à partir d'un cahier des charges de performances et de contraintes.

**Revendications**

**1.** - Procédé pour déterminer la position $\mathbf{p}_n$ et les orientations ($\alpha_n$, $\beta_n$) de capteurs Ci ou antennes dans un réseau de capteurs comprenant $N$ capteurs et $M$ sources à partir de données contenues dans un cahier des charges, telles que les performances, l'encombrement, ledit réseau (10) de capteurs étant pourvu de moyens de traitement (11) de signaux reçus sur lesdits capteurs et destiné à effectuer une étape de goniométrie **caractérisé en ce qu'**il comporte au moins les étapes suivantes :

• déterminer le gain $G_n$ d'un capteur d'indice $n$ de position $\mathbf{p}_n$ ayant subi une rotation ($\alpha_n$,$\beta_n$), en utilisant

$$G_n(\Theta,\mathbf{P})=\mathbf{g}(\alpha_n,\beta_n)^T\,\mathbf{u}(\Theta,\mathbf{P})$$

sachant $$\mathbf{g}\left(\alpha_n,\beta_n\right)=\begin{bmatrix} rot\left(\alpha_n\right) & 0 \\ 0 & rot\left(\alpha_n\right) \end{bmatrix}\begin{bmatrix} rot\left(\beta_n\right) & 0 \\ 0 & rot\left(\beta_n\right) \end{bmatrix}\mathbf{em}$$

avec

$\mathbf{em} = [E_x\,E_y\,E_z\,M_x\,M_y\,M_z]^T$ les composantes électriques et magnétiques du capteur, $^T$ est la transposée, P est la polarisation

• déterminer, à partir de la matrice de gain G des antennes contenant les $\mathbf{g}(\alpha_n,\beta_n)$, le vecteur directeur $\mathbf{a}(\Theta, P)$ d'un réseau hétérogène comme le produit d'une matrice diagonale $\Phi(\Theta)$ contenant sur sa diagonale les composantes $a_n^{homogène}$ $(\Theta)$ du vecteur directeur du réseau homogène , avec $\mathbf{G}$ la matrice de gain et $\mathbf{u}(\Theta,\mathbf{P})$ un vecteur directement dépendant du vecteur champ électrique de la polarisation verticale $\mathbf{k}_V$ $(\Theta)$ et du vecteur champ électrique de la polarisation horizontale $\mathbf{k}_H$ $(\Theta)$ du capteur ainsi que des composantes de la polarisation

$$\mathbf{a}\left(\Theta,\mathbf{P}\right)=\Phi\left(\Theta\right)\times\mathbf{G}\times\mathbf{u}\left(\Theta,\mathbf{P}\right)$$

où

$$\Phi\left(\Theta\right)=\begin{bmatrix} a_1^{homogene}\left(\Theta\right) & 0 & 0 \\ 0 & \ddots & 0 \\ 0 & 0 & a_N^{homogene}\left(\Theta\right) \end{bmatrix} \quad \text{et} \quad \mathbf{G}=\begin{bmatrix} \mathbf{g}\left(\alpha_1,\beta_1\right)^T \\ \vdots \\ \mathbf{g}\left(\alpha_N,\beta_N\right)^T \end{bmatrix}$$

avec $a_n^{homogène}$ $(\Theta)$ la réponse du $n$-ième capteur d'un réseau homogène dépendant de l'incidence $\Theta$, du vecteur $\mathbf{em}$ associé à l'élément rayonnant des antennes ainsi que du triplet ($\alpha_n$, $\beta_n$, $\mathbf{p}_n$),

• déterminer un ensemble de triplets ($\alpha_n$, $\beta_n$, $\mathbf{p}_n$) pour ($1{\leq}n{\leq}N$) vérifiant 5 un critère fixé par le cahier des charges.

**2.** - Procédé selon la revendication 1 **caractérisé en ce qu'**il comporte une étape de détermination de la valeur des triplets ($\alpha_n$, $\beta_n$, $\mathbf{p}_n$) donnant un rang de la matrice de gain **G** strictement supérieur à 1. 10

**3.** - Procédé selon la revendication 1 **caractérisé en ce que** dans le cas d'un réseau hétérogène de capteurs identiques où la matrice d'ouverture du réseau de capteurs est:

$$\widetilde{\mathbf{D}}_{pp}\left(\mathbf{u}\left(\Theta,\mathbf{P}_{Polar}\right),\mathbf{G}\left(\boldsymbol{\alpha},\boldsymbol{\beta}\right),\mathbf{P},\lambda\right)=\mathbf{D}_{Polar}\left(\Theta,\boldsymbol{\alpha},\boldsymbol{\beta},\mathbf{P},\lambda\right)$$

$$\text{sachant que}\begin{cases} \boldsymbol{\alpha}=\begin{bmatrix} \alpha_1 & \cdots & \alpha_N \end{bmatrix}^T \\ \boldsymbol{\beta}=\begin{bmatrix} \beta_1 & \cdots & \beta_N \end{bmatrix}^T \\ \mathbf{P}=\begin{bmatrix} \mathbf{p}_1 & \cdots & \mathbf{p}_N \end{bmatrix} \end{cases}$$

est une fonction de la direction $\Theta$, de la polarisation $\mathbf{P}_{Polar}$, des angles de rotations 15 $\alpha$, $\beta$ et de la matrice de position $\mathbf{P} = [\mathbf{p}_1 \cdots \mathbf{p}_N]$ des capteurs, $\mathbf{G}(\alpha,\beta)$ est la matrice de gain du réseau composé de l'ensemble des gains $G_n$ $(\alpha_n,\beta_n)$ d'un capteur $n$ ayant subi une rotation $(\alpha_n,\beta_n)$ déterminer $N$ triplets $(\alpha_n, \beta_n, \mathbf{p}_n)$ tels que :

la matrice d'ouverture

$$\mathbf{D}_{pp}^{\ directif} = \mathbf{D}_{Polar}\left(\Theta, \boldsymbol{\alpha}, \boldsymbol{\beta}, \mathbf{P}, \lambda\right) \ \text{sachant que} \begin{cases} \boldsymbol{\alpha} = \begin{bmatrix} \alpha_1 & \cdots & \alpha_N \end{bmatrix}^T \ \text{et} \\ \boldsymbol{\beta} = \begin{bmatrix} \beta_1 & \cdots & \beta_N \end{bmatrix}^T \end{cases}$$

$$Polar = V \text{ ou } H$$

minimiser le critère suivant :

$$\left(\hat{\boldsymbol{\alpha}}, \hat{\boldsymbol{\beta}}, \hat{\mathbf{P}}\right) = \min_{(\boldsymbol{\alpha}, \boldsymbol{\beta}, \mathbf{P})} J\left(\boldsymbol{\alpha}, \boldsymbol{\beta}, \mathbf{P}\right)$$

$$\text{sachant que } J\left(\boldsymbol{\alpha}, \boldsymbol{\beta}, \mathbf{P}\right)^2 = \int\limits_{\Theta, Polar=V,H} \left\| \mathbf{D}_{pp}^{\ directif} - \mathbf{D}_{Polar}\left(\Theta, \boldsymbol{\alpha}, \boldsymbol{\beta}, \mathbf{P}, \lambda\right) \right\|_2$$

$$\text{où } \left\| \mathbf{A} \right\|_2 = \sum_{i,j} \frac{\left| \mathbf{A}\left(i,j\right) \right|^2}{N^2}$$

où A est une matrice de dimension NxN afin d'obtenir les triplets $(\alpha_n, \beta_n, \mathbf{p}_n)$

**4.** - Procédé selon la revendication 3 **caractérisé en ce que** l'étape d'optimisation est exécutée de la manière suivante : de manière directe en cherchant dans tout l'espace des paramètres $(\alpha_n, \beta_n, \mathbf{p}_n)$ pour $1 \le n \le N$.

**5.** - Procédé selon la revendication 3 **caractérisé en ce que** l'étape d'optimisation est exécutée de la manière suivante : de manière itérative en initialisant les positions $\mathbf{p}_n$ des capteurs par le processus de l'équation :

$$\mathbf{p}_n = \left(\mathbf{D}_{pp}^{\ directif}\right)^{1/2} \left(\mathbf{D}_{pp}^{\ ini}\right)^{-1/2} \left(\mathbf{p}_n^{\ ini} - \overline{\mathbf{p}}^{\ ini}\right)$$

$$\text{où} \begin{cases} \mathbf{D}_{pp}^{\ ini} = \dfrac{1}{N} \sum_{n=1}^{N} \left(\mathbf{p}_n^{\ ini} - \overline{\mathbf{p}}^{\ ini}\right)\left(\mathbf{p}_n^{\ ini} - \overline{\mathbf{p}}^{\ ini}\right)^T \\ \\ \text{avec } \overline{\mathbf{p}}^{\ ini} = \dfrac{1}{N} \sum_{n=1}^{N} \mathbf{p}_n^{\ ini} \end{cases}$$

• en supposant être en présence d'un réseau homogène, puis
• en cherchant dans l'espace des $(\alpha_n, \beta_n)$ en fixant les valeurs des positions $\mathbf{p}_n$
• puis en recherchant les $\mathbf{p}_n$ en fixant les valeurs des $(\alpha_n,\beta_n)$, et ensuite
• réitérer le processus jusqu'à ce que l'écart entre $\mathbf{D}_{pp}^{directif}$ et $\mathbf{D}_{polar}(\Theta, \alpha, \beta, \mathbf{P}, \lambda)$ soit suffisamment faible.

**6.** - Procédé selon la revendication 5 **caractérisé en ce que** dans le cas d'un réseau homogène de capteurs il utilise comme critère d'arrêt de l'étape d'itération le seuil d'acceptation des paramètres $\hat{\alpha}, \hat{\beta}, \hat{\mathbf{P}}$ suivant :

$$J\left(\hat{\boldsymbol{\alpha}}, \hat{\boldsymbol{\beta}}, \hat{\mathbf{P}}\right) \le 0.1 \frac{trace\left(\mathbf{D}_{pp}\right)}{N}$$

où $\mathbf{D}_{pp}$ est défini par :

$$\widetilde{\mathbf{D}}_{pp}\left(\mathbf{u}_m, \mathbf{G}, \mathbf{P}, \lambda\right) = \mathbf{D}_{pp}\left(\mathbf{G}, \mathbf{u}, \mathbf{P}\right) = \mathbf{D}_{pp} = \frac{1}{N} \sum_{n=1}^{N} \left(\mathbf{p}_n - \overline{\mathbf{p}}\right)\left(\mathbf{p}_n - \overline{\mathbf{p}}\right)^T$$

$$\text{avec } \overline{\mathbf{p}} = \frac{1}{N} \sum_{n=1}^{N} \mathbf{p}_n$$

**7.** - Procédé selon la revendication 1 dans lequel lesdits capteurs sont des antennes planes disposées sur un cylindre avec les paramètres de position pour une antenne $n$:

$$x_n = \sqrt{\left(R_a\right)^2 - \left(z_n\right)^2}$$
$$\alpha_n = angle\left(x_n + jz_n\right)$$

• à partir de la connaissance de la valeur de $z_n$ des capteurs sur l'axe des z,
• déterminer l'angle d'orientation $\alpha_n$ ainsi que les positions $x_n$ des antennes sur l'axe des x de la manière suivante : les paramètres de recherche de l'optimisation de réseaux sont réduits aux angles $\beta_n$ d'orientation des capteurs dans le plan (y, z) ainsi que les positions ($y_n$, $z_n$) des antennes dans le plan (y, z):

• les valeurs des angles $\beta_n$ de rotation de chacune des antennes dans le plan (y, z) sont fixées,
• la position des capteurs sur l'axe des z est paramétrée par ($z_0$,$\rho$) de la manière suivante :

$$z_n = z_0 + \rho\left(z_n^{ini} - \min_n\left(z_n^{ini}\right)\right)$$

où ($y_n^{ini}$, $z_n^{ini}$) sont les positions du réseau d'antenne hétérogène dans le plan (y, z) tel que $\mathbf{D}_{pp}^{directif} = \mathbf{D}_{pp}$, la matrice $\mathbf{D}_{polar}$ ($\Theta,\alpha,\beta,\mathbf{P},\lambda$) sur laquelle porte l'optimisation est une fonction des coordonnées ($y_n$, $z_n$) dans le plan $y,z$ car $\mathbf{p}_n$ et $\alpha_n$ sont des fonctions de ($y_n,z_n$),

$$\mathbf{D}_{Polar}\left(\Theta, \boldsymbol{\alpha} = f\left(\mathbf{P}\right), \boldsymbol{\beta}, \mathbf{P}\left(\mathbf{y}, \mathbf{z}\right), \lambda\right) = \mathbf{D}_{Polar}\left(\Theta, \mathbf{y}, \mathbf{z}, \lambda\right)$$

$$\text{où } \begin{cases} \mathbf{y} = \left[y_1 \quad \cdots \quad y_N\right]^T \\ \mathbf{z} = \left[z_1 \quad \cdots \quad z_N\right]^T \end{cases}$$

En fixant la matrice $\mathbf{D}_{pp}^{directif}$ de la manière suivante :

$$\mathbf{D}_{pp}^{directif} = \begin{bmatrix} D_{xx} & 0 & D_{xz} \\ 0 & D_{yy} & 0 \\ D_{xz} & 0 & D_{zz} \end{bmatrix} \text{ avec } \underline{\mathbf{D}}_{pp}^{directif} = \begin{bmatrix} D_{yy} & D_{yz} \\ D_{yz} & D_{zz} \end{bmatrix}$$

le procédé exécute ensuite les étapes suivantes
**Etape n˚A.1 :** Tirage aléatoire des valeurs des positions d'antennes $\mathbf{p}_n^0 = [y_n^0 \ z_n^0]^T$
**Etape n˚A.2 :** Calcul de $\mathbf{D}_{pp}$ avec les positions $\mathbf{p}_n^0$
**Etape n˚A.3 :** Transformation des positions $\mathbf{p}_n^0$ pour obtenir la matrice $\underline{\mathbf{D}}_{pp}^{directif}$ des ouvertures équivalentes en effectuant

$$\mathbf{p}_n^{ini} = \left[y_n^{ini} \quad z_n^{ini}\right]^T = \left(\underline{\mathbf{D}}_{pp}^{directif}\right)^{1/2}\left(\mathbf{D}_{pp}\right)^{-1/2}\left(\mathbf{p}_n^0 - \overline{\mathbf{p}}^0\right)$$

Boucle sur $(z_0,\rho)$ tels que $z_n = z_0 + \rho\left(z_n^{\ ini} - \min_n\left(z_n^{\ ini}\right)\right)$

**Etape n˚A.4.1 :** Calcul de $x_n$ en fonction de $z_n$

**Etape n˚A.4.2 :** Calcul de $\alpha_n$ en fonction de $x_n$ et $z_n$

**Etape n˚A.4.3 :** Déduction de $\mathbf{p}_n = [x_n\ y_n^{\ ini}\ z_n]^T$ **Etape n˚A.4.4 :** Connaissant les $\beta_n$ calculer

$$\left(\Delta\mathbf{D}\left(z_0,\rho\right)\right)^2 = \int\limits_{\Theta,Polar=V,H} \left\|\mathbf{D}_{pp}^{\ directif} - \mathbf{D}_{Polar}\left(\Theta,\mathbf{y}\left(z_0,\rho\right),\mathbf{z}\left(z_0,\rho\right),\lambda\right)\right\|_2$$

Etape n˚A.4.5: A la première valeur de $\underline{(z_0,\rho)}$ initialisation avec

$$\begin{cases} \Delta\mathbf{D}_{opt} = \Delta\mathbf{D}\left(z_0,\rho\right) \\ \left(\hat{z}_0,\hat{\rho}\right) = \left(z_0,\rho\right) \end{cases}$$

**Etape n˚A.4.6:** Si $\Delta\mathbf{D}_{opt}|>|\Delta\mathbf{D}(z_0,\rho)|$ alors $(\hat{z}_0,\hat{\rho})=(z_0,\rho)$

• Fin de la Boucle sur $(z_0,\rho)$

**Etape n˚A.4.6 :** Calcul de $z_n, x_n$ et $\alpha_n$ sachant $z_0 = \hat{z}_0$ et $\hat{\rho} = \rho$ **Etape n˚A.4.7:** Déduction des positions optimales $\mathbf{p}_n = [x_n\ y_n^{\ ini}\ z_n]^T$

8. - Procédé selon la revendication 7 **caractérisé en ce qu'**il comporte une étape de détermination des *nb* meilleur réseaux en terme d'ambiguïté parmi un total de K réseaux vérifiant les contraintes du cahier des charges en termes de performances et d'encombrement au moins les étapes suivantes comprenant **Initialisation :** $k$=1;

   **Etape B.1 :** Tirage d'un réseau ayant des capteurs de position $\mathbf{p}_i^{ini}$, ce qui conduit à une matrice initiale de position des capteurs : $\mathbf{P}^{ini} = [\mathbf{p}_1^{\ ini} \ldots \mathbf{p}_N^{\ ini}]$

   Tirage aléatoire des vecteurs d'orientations $\beta^{(k)}$ et $\alpha^{(k)}$.

   **Etape B.2 :** Recherche de la matrice de transformation $\mathbf{W}$ qui minimise le critère $J\ (\alpha,\beta,\mathbf{P} = \mathbf{WP}^{ini})$ de l'équation

$$\left(\hat{\boldsymbol{\alpha}},\hat{\boldsymbol{\beta}},\hat{\mathbf{P}}\right) = \min_{(\boldsymbol{\alpha},\boldsymbol{\beta},\mathbf{P})} J\left(\boldsymbol{\alpha},\boldsymbol{\beta},\mathbf{P}\right)$$

$$\text{sachant que } J\left(\boldsymbol{\alpha},\boldsymbol{\beta},\mathbf{P}\right)^2 = \int\limits_{\Theta,Polar=V,H} \left\|\mathbf{D}_{pp}^{\ directif} - \mathbf{D}_{Polar}\left(\Theta,\boldsymbol{\alpha},\boldsymbol{\beta},\mathbf{P},\lambda\right)\right\|_2$$

$$\text{où } \left\|\mathbf{A}\right\|_2 = \sum_{i,j} \frac{\left|\mathbf{A}\left(i,j\right)\right|^2}{N^2}$$

la matrice $\hat{\mathbf{W}}$ qui minimise le critère $J\ (\alpha,\beta,\mathbf{P} = \mathbf{WP}^{ini})$ donnant la position des capteurs d'un réseau $\mathbf{P}^{(k)} = [\mathbf{p}_1^{\ (k)} \ldots \mathbf{p}_N^{\ (k)} = \mathbf{WP}^{ini}$.

**Etape B.3 :** vérifier que le réseau de positions $\mathbf{P}^{(k)}$ vérifiant les contraintes de performances du cahier des charges vérifie aussi les contraintes d'encombrement du cahier des charges, si ce n'est pas le cas retourner à l'étape B1.

**Etape B.4:** calcul du niveau d'ambiguïtés $\eta_1^{(k)} = \min_\lambda \eta_1\left(\lambda\right)^{(k)}$ du réseau paramétré par $(\alpha^{(k)}, \beta^{(k)}, \mathbf{P}^{(k)})$ selon

$$\eta_1(\lambda) = \min_{\Theta_1} \eta_1(\lambda, \Theta_1)$$

$$\eta_1(\lambda, \Theta_1) = \min_{\substack{\Theta \\ \Theta \neq \Theta_1}} \left( J_\lambda(\Theta_1, \Theta) \right)$$

et

$$J_\lambda(\Theta_1, \Theta) = 0 = \frac{\det\left(\mathbf{Q}_1(\Theta_1, \Theta)\right)}{\det\left(\mathbf{Q}_2(\Theta_1, \Theta)\right)} \quad \text{avec} \quad \begin{cases} \mathbf{Q}_1(\Theta_1, \Theta) = \mathbf{U}(\Theta)^H \, \Pi_{DP}(\Theta_1) \, \mathbf{U}(\Theta) \\ \mathbf{Q}_2(\Theta_1, \Theta) = \mathbf{U}(\Theta)^H \, \mathbf{U}(\Theta) \end{cases}$$

et stockage des positions et orientations des capteurs sélectionnés lors de l'étape B.1

**Etape B.5 :** $k=k+1$. Si $k<K$ retour à l'étape B1.

**Etape B.6 :** connaissant le niveau d'ambiguïtés $\eta_1^{(k)}$ de tous les réseaux vérifiant les contraintes d'encombrement et de performances paramétrées par ($\alpha^{(k)}$, $\beta^{(k)}$, $\mathbf{P}^{(k)}$), classer l'ensemble des réseaux suivant le niveau d'ambigüité et conserver les *nb* meilleurs ayant les plus fortes valeurs de $\eta_1^{(k)}$.

9. - Procédé selon l'une des revendications précédentes **caractérisé en ce qu'**il comporte des étapes permettant le calcul du niveau d'ambigüités du réseau de capteurs exécutées de la manière suivante :

**Etape C.1 :** calcul de la matrice de gain **G** à partir du couple de vecteur ($\alpha^{(k)}$, $\beta^{(k)}$) selon l'équation :

$$\Phi(\Theta) = \begin{bmatrix} a_1^{homogene}(\Theta) & 0 & 0 \\ 0 & \ddots & 0 \\ 0 & 0 & a_N^{homogene}(\Theta) \end{bmatrix} \quad \text{et} \quad \mathbf{G} = \begin{bmatrix} \mathbf{g}(\alpha_1, \beta_1)^T \\ \vdots \\ \mathbf{g}(\alpha_N, \beta_N)^T \end{bmatrix} \tag{22}$$

à partir de **G,** déduction de $\mathbf{G_V}$ et $\mathbf{G_H}$ selon

$$\mathbf{G} \times \mathbf{u}(\Theta, \mathbf{P}) = \left( P_V \times \mathbf{G}_V + P_H \times \mathbf{G}_H \right) \mathbf{u}_V(\Theta) \quad \text{où} \quad \begin{cases} \mathbf{G} = \mathbf{G}_V = \begin{bmatrix} \mathbf{E}_n & \mathbf{M}_n \end{bmatrix} \\ \mathbf{G}_H = \begin{bmatrix} -\mathbf{M}_n & \mathbf{E}_n \end{bmatrix} \end{cases} \tag{23}$$

**Etape C.2 :** à partir de la connaissance de $\mathbf{P}^{(k)}$, calcul des matrices $\Phi$ ($\Theta$) de l'équation (20) en fonction de l'incidence $\Theta$,

**Etape C.3 :** calcul de $a_{V,\lambda}$ ($\Theta$) et $\mathbf{a}_{H,\lambda}$ ($\Theta$) selon

$\mathbf{a}_{V,\lambda}(\Theta) = \Phi(\Theta) \times \mathbf{G}_V$ et $\mathbf{a}_{H,\lambda}$ ($\Theta$) $= \Phi(\Theta) \times \mathbf{G}_H$

à partir de $\Phi$ ($\Theta$), $\mathbf{G_V}$ et $\mathbf{G_H}$.

Boucle sur $\Phi_1$:

**Etape C.4 :** calcul du critère $J_\lambda$ ($\Theta_1, \Theta$) de l'équation

**Etape C.5 :** calcul de $\eta_1$ ($\lambda$, $\Theta_1$) suivant

Fin de la boucle sur $\Theta_1$:

**Etape C.6 :** minimisation de $\eta_1$ ($\lambda$, $\Theta_1$) en $\Theta_1$ pour obtenir $\eta_1$ ($\lambda$)$^{(k)}$.

10. - Dispositif pour déterminer la position optimale de capteurs dans un réseau comprenant plusieurs capteurs Ci ou antennes **caractérisé en ce qu'**il comporte des moyens de traitement (11) adaptés à mettre en oeuvre les étapes du procédé selon l'une des revendications 1 à 9.

**FIG.1**

**FIG.2**

**FIG.3**

**FIG.4**

**FIG.5**

**FIG.10**

k(θ,Δ) : Vecteur d'onde

FIG.6

k(θ,Δ) : Vecteur d'onde

FIG.7

$V(t) = G^{dipôle}(\theta, \Delta) s(t)$

FIG.8

$V(t) = G^{boucle}(\theta, \Delta) s(t)$

FIG.9

Cahier des
charges

Famille
de «nb » meilleurs
réseaux

ouverture en
élévation

Critères
d'encombrement

$B_1$

$B_2$

$B_3$

$B_4$

Tirage d'un
réseau dans
le plan (y,z)
et des $\beta_n$

$p_i^{ini}$

Transformation non
linéaire du réseau
$p_i^{(k)} = W\, p_i^{ini}$
W est calculé en
optimisant un critère

$P_i^{(k)}$

Vérifié ?

Oui

Calcul du
niveau
d'ambiguïté

Non

Classement des
réseaux suivant le
niveau d'ambiguïté

$B_6$

Itérations

$k = K+1$ si : $k < K$ retour à $B_1$

$B_5$

## FIG.11

z

x

y

## FIG.12

FIG.13

FIG.14

Réseau circulaire
de rayon R avec N capteurs

Capteur Elémentaire $C_i$

FIG.15

Réseau circulaire
de rayon $R_1$ avec $N_1$ capteurs

$\alpha_2 - \alpha_1$

$R_1$

$R_2$

Capteur Elémentaire

Réseau circulaire
de rayon $R_2$ avec $N_2$ capteurs

FIG.16

$O_2$

$\overline{O_1\,O_2} = \begin{bmatrix} x_0 \\ y_0 \end{bmatrix}$

$\alpha$

$O_1$

FIG.17

Capteur
élémentaire

$D_{ph}$

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0903836

- FR 0903835

**Littérature non-brevet citée dans la description**

- **A.FERRÉOL ; P.LARZABAL ; M.VIBERG.** *IEEE Trans.Signal Processing,* Mars 2006, vol. 54 (3), 907-920